# EUROPEAN PATENT SPECIFICATION

(11) **EP 1 657 415 B1**
(45) Date of publication and mention of the grant of the patent: **30.06.2010**
(21) Application number: 05024913.5
(22) Date of filing: 15.11.2005
(51) Int. Cl.: F01N 11/00, F01N 3/20

(54) **Engine Self-diagnosis system**
Selbstdiagnose Vorrichtung eines Verbrennungsmotors
Système autodiagnostic pour moteur à combustion

(30) Priority: 15.11.2004 JP 2004330119
(43) Date of publication of application: 17.05.2006
(73) Proprietor: HITACHI, LTD., Chiyoda-ku Tokyo 100-8280 (JP)
(72) Inventor: Nakagawa, Shinji Hitachi, Ltd. IPG 12th Floor, Chiyoda-ku Tokyo 100-8220 (JP); Katogi, Kozo Hitachi, Ltd. IPG 12th Floor, Chiyoda-ku Tokyo 100-8220 (JP); Ohsuga, Minoru Hitachi, Ltd. IPG 12th Floor, Chiyoda-ku Tokyo 100-8220 (JP)
(74) Representative: MERH-IP Matias Erny Reichl Hoffmann

(56) References cited:
- WO-A-01/49990
- DE-A1- 4 330 997
- DE-A1- 19 726 791
- JP-A- 10 159 543
- US-A1- 2002 129 599
- US-A1- 2003 070 420
- US-A1- 2004 074 227

## Description

### BACKGROUND OF THE INVENTION

### 1. Field of the Invention

The present invention relates to an engine self-diagnosis system, and more particularly to an engine self-diagnosis system capable of performing diagnosis of an exhaust cleaning catalyst, which is provided in an exhaust passage, at a low cost and high accuracy.

### 2. Description of the Related Art

Recently, higher accuracy in diagnosis of various devices related to the engine exhaust performance has been demanded with severer control applied to self-diagnosis of automobile engines in North America, Europe, Japan, etc. In particular, the diagnosis accuracy of a catalyst for cleaning specific components (HC, CO and NOx) in engine exhaust is important. Generally, a catalyst exhibits the exhaust cleaning function at temperatures not lower than a predetermined value. A shift into the state where the exhaust cleaning rate is not lower than a predetermined value is called catalyst light-off (or catalyst activation). The catalyst diagnosis has hitherto been made on the cleaning capacity after the catalyst light-off. On the other hand, with a recent increase in performance of a catalyst and catalyst control, the amount of the specific components in engine exhaust has been dominantly occupied by the amount exhausted during a period from the engine startup to the catalyst light-off. For that reason, it is important to diagnose the light-off performance of the catalyst.

### SUMMARY OF THE INVENTION

As one example of a system for diagnosing the catalyst performance, Patent Document 1 (JP-A-2003-176714) proposes a system for detecting the exhaust component concentration corresponding to both the engine run status and the catalyst operating status by an exhaust component sensor, e.g., an HC sensor, disposed downstream of the catalyst, and the diagnosing, e.g., the light-off performance of the catalyst in accordance with the detected value.

Also, Patent Document 2 (JP-A-5-248227) proposes a diagnosis system including an O₂ sensor downstream of a catalyst and a sensor for detecting the catalyst temperature. Then, when the catalyst performance is diagnosed in accordance with the O₂ sensor downstream of the catalyst, a reference value for use in diagnosis of the catalyst performance is changed in accordance with the detected catalyst temperature.

However, any of those proposed diagnosis systems requires an additional new sensor, such as the exhaust component sensor and the temperature sensor, and increases the system cost.

Meanwhile, Patent Document 3 (JP-A-2001-317345) proposes a system for detecting the timing at which the oxygen storage capacity of a catalyst is activated, based on the correlation between output signals of O₂ sensors disposed upstream and downstream of the catalyst, and diagnosing the light-off performance of the catalyst in accordance with the detected timing.

Such a diagnosis system requires the O₂ sensor downstream of the catalyst to be activated before the catalyst light-off. In practice, however, to avoid the sensor from causing a trouble, e.g., cracking due to the presence of water in the catalyst, the sensor downstream of the catalyst is generally heated up after the water in the catalyst has been sufficiently evaporated. Hence, an improvement of the O₂ sensor downstream of the catalyst is required in order to activate that sensor before the catalyst light-off as in the above-mentioned diagnosis system.

Further, Patent Document 4 (JP-A-9-158713) proposes a system in which, in consideration of that the O₂ sensor (or the A/F sensor) downstream of the catalyst is not sufficiently activated during the catalyst light-off, a diagnosis determination value is changed depending on the temperature of the O₂ sensor downstream of the catalyst.

However, such a diagnosis system also requires the O₂ sensor downstream of the catalyst to be activated to some extent at the timing of the catalyst light-off, and accompanies a risk of sensor cracking as in the diagnosis system proposed by Patent Document 3. Moreover, there is a fear that diagnosis accuracy lowers because the diagnosis is performed during activation of the sensor downstream of the catalyst.

All of the above-mentioned diagnosis systems have still another problem that, because light-off characteristics are directly detected, it is difficult to distinctively confirm whether the light-off performance of the catalyst, i.e., the catalyst itself, has deteriorated or the performance of means for raising the temperature of the catalyst has reduced.

US 2002/129599 A1 shows a diagnosis system for an engine including an exhaust pipe, a hydrocarbon (HC) absorbent arranged within the exhaust pipe, an upstream air/fuel ratio sensor arranged upstream of the HC absorbent and detecting a wide range air/fuel ratio of an exhaust gas, a downstream air/fuel ratio sensor arranged downstream of the HC absorbent. In the adsorption HC disconnection/purification phase of the HC catalyst, the air/fuel ratio of HC catalyst upper stream is controlled such that the air/fuel ratio of HC catalyst lower stream becomes fixed. HC adsorption performance is detected from the lean shift amount of a catalyst upper stream air/fuel ratio at this time.

In view of the above-described problems in the related art, an object of the present invention is to provide an engine self-diagnosis system capable of performing diagnosis of the light-off performance of a catalyst at a low cost and high accuracy.

In order to attain the above object, the present invention provides an engine self diagnosis system according to the independent claims. The dependent claims relate to preferred embodiments.

The present invention may provide an engine self-diagnosis system comprising a unit for directly or indirectly detecting an exhaust cleaning capacity after-light-off (performance A) when temperature of the catalyst or temperature of exhaust gas flowing into the catalyst is within a predetermined temperature range; and/or a unit for, based on the detected catalyst exhaust cleaning capacity after-light-off, estimating the catalyst light-off temperature (performance B) which is resulted, when the temperature of the catalyst is outside the predetermined temperature range.

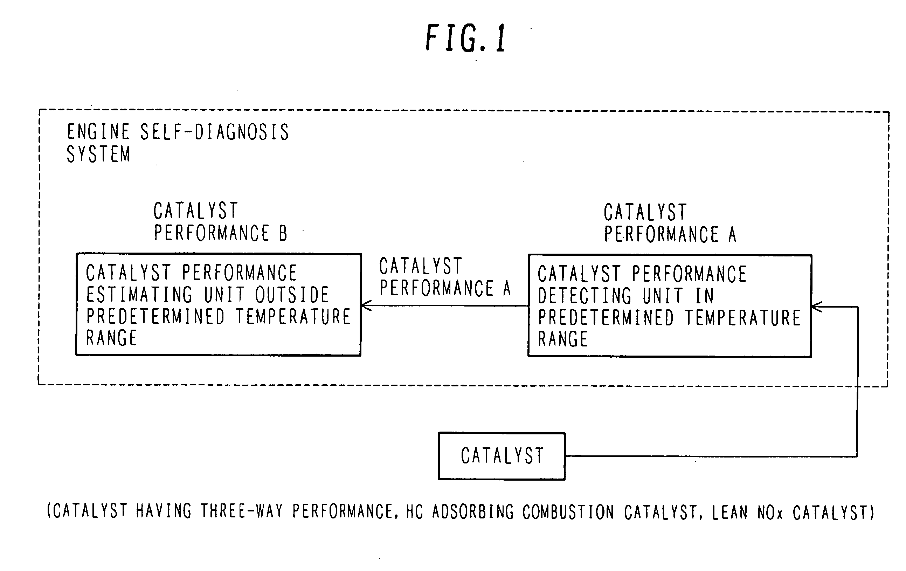

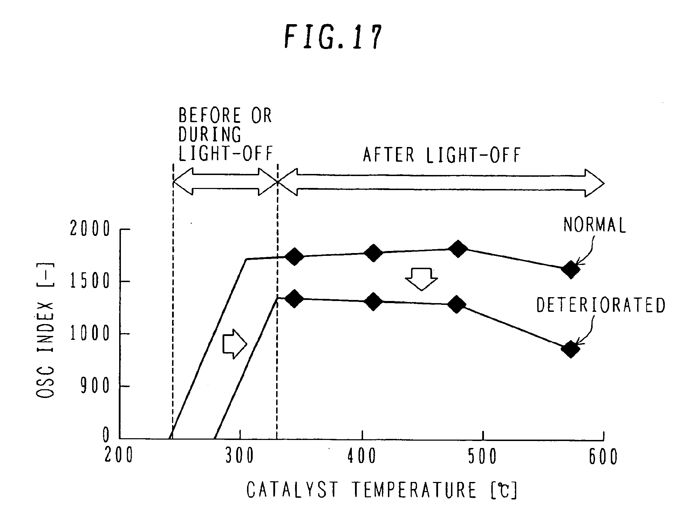

In a first form of the present invention embodying the above features, diagnosis (detection) of the catalyst performance after light-off of the catalyst is carried out, and/or based on the result of the performance diagnosis, the catalyst performance before or during the light-off is estimated for diagnosis. In general, static (steady-state) performance of a catalyst after the light-off is decided dominantly depending on the specific surface area (dispersibility) of a precious metal used in the catalyst. On the other hand, the light-off performance of the catalyst is also decided dominantly depending on the specific surface area of the precious metal. Accordingly, by detecting the catalyst performance after the light-off, the catalyst performance before or during the light-off can be indirectly estimated (see Figs. 1 and 17).

In a second form of the engine self-diagnosis system according to the present invention, the catalyst has at least three-way performance.

In a third form of the engine self-diagnosis system according to the present invention, the catalyst is an HC adsorbing combustion catalyst that adsorbs HC when the catalyst temperature is within a predetermined temperature range, desorbs the adsorbed HC when the catalyst temperature exceeds the predetermined temperature range, and cleans the adsorbed and desorbed HC.

In a fourth form of the engine self-diagnosis system according to the present invention, the catalyst is a lean NOx catalyst.

Thus, because the catalysts used in the second, third and fourth forms are all ones using precious metals, the diagnosis principle employed in the first form is also applicable.

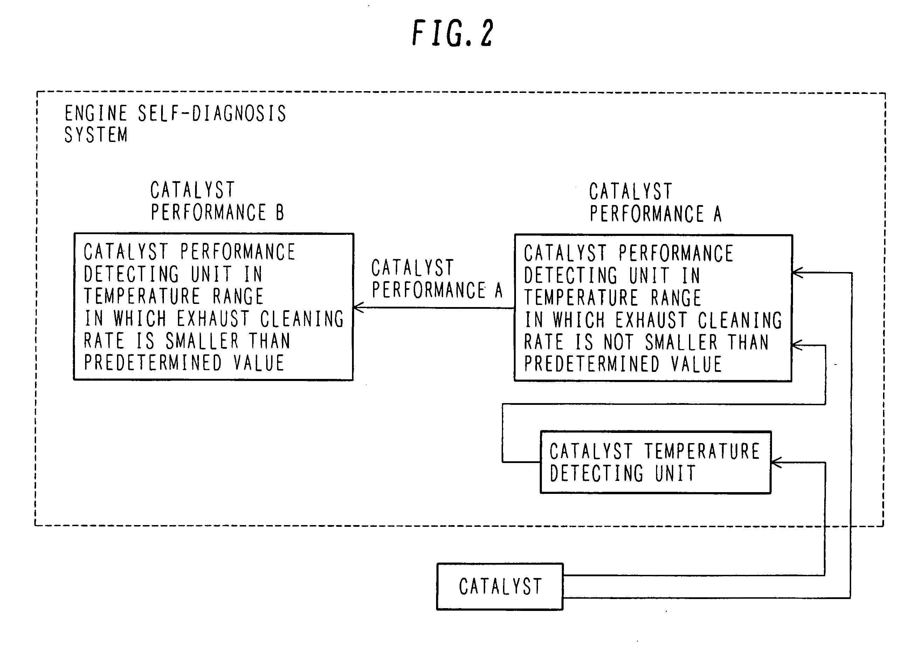

In a fifth form of the engine self-diagnosis system according to the present invention, the system further comprises a unit for directly or indirectly detecting the temperature of the catalyst; a unit for directly or indirectly detecting the exhaust cleaning capacity after-light-off when the catalyst temperature detected by the detecting unit is within a temperature range in which an exhaust cleaning rate is not smaller than a predetermined value; and/or a unit for, based on the detected exhaust cleaning capacity after-light-off, estimating the catalyst light-off temperature resulted when the catalyst temperature detected by the detecting unit is within a temperature range in which the exhaust cleaning rate is smaller than the predetermined value (see Fig. 2).

Thus, in the fifth form, the temperature ranges after and before the light-off are defined respectively depending on that the exhaust cleaning rate is not smaller than or is smaller than the predetermined value.

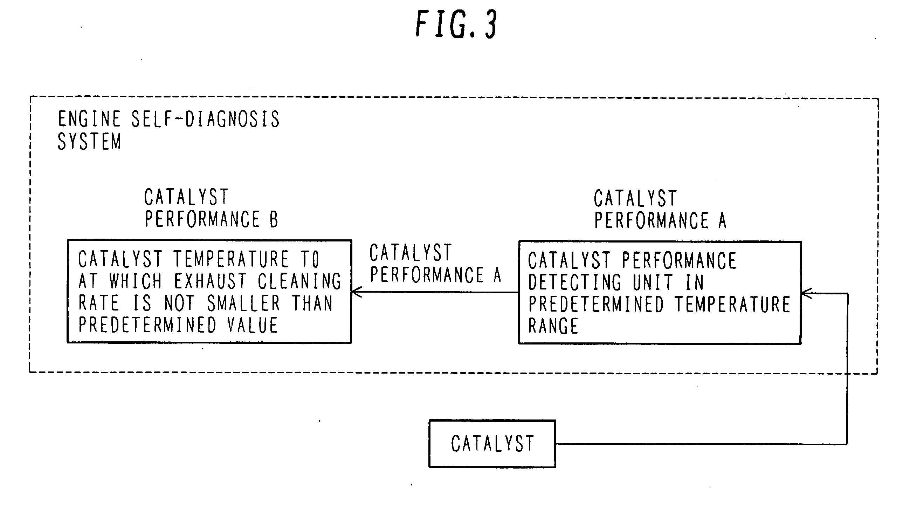

In a sixth form of the engine self-diagnosis system according to the present invention, the catalyst light-off temperature is a catalyst temperature T0 at which the exhaust cleaning rate is not.smaller than the predetermined value (see Fig. 3).

Thus, in the sixth form, the catalyst light-off temperature estimated from the directly detected catalyst performance after the light-off is specifically defined as the light-off temperature.

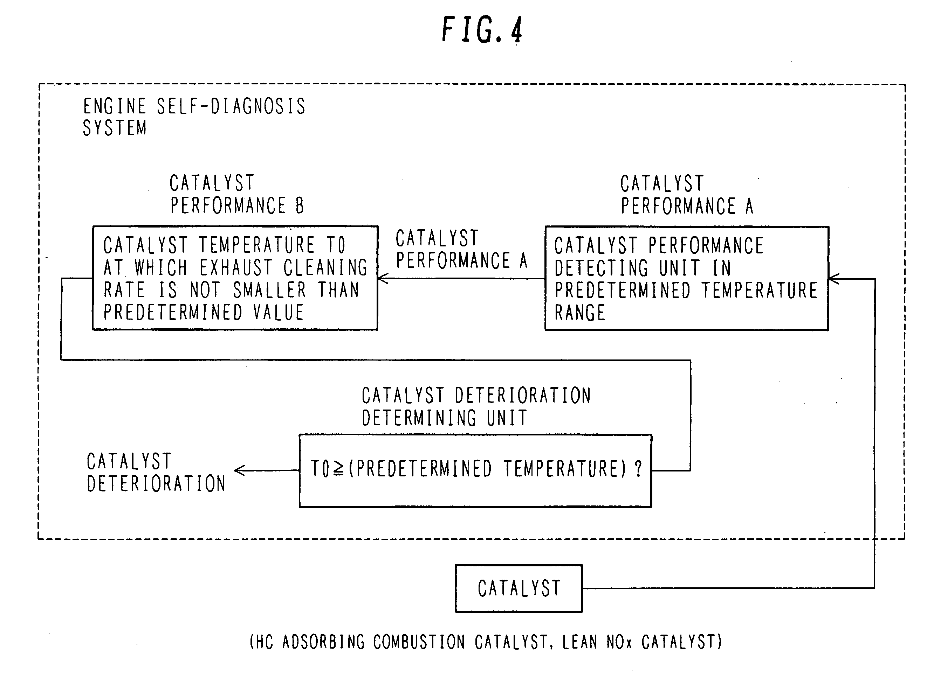

In a seventh form of the engine self-diagnosis system according to the present invention, the system further comprises catalyst deterioration determining unit for determining that the catalyst has deteriorated, when the catalyst temperature T0 at which the exhaust cleaning rate is not smaller than the predetermined value exceeds a predetermined temperature (see Fig. 4).

Thus, in the seventh form, when the estimated light-off temperature exceeds the predetermined temperature, a time from the engine startup to the catalyst light-off is prolonged and particular components (HC, CO and NOx) in exhaust are increased. In such a condition, therefore, it is determined that the catalyst has deteriorated.

In an eighth form of the engine self-diagnosis system according to the present invention, the catalyst is an HC adsorbing combustion catalyst, and the catalyst deterioration determining unit determines that the HC adsorbing combustion catalyst has deteriorated, when the catalyst temperature T0 at which the exhaust cleaning rate is not smaller than the predetermined value exceeds a predetermined temperature (see Fig. 4).

The function of the HC adsorbing combustion catalyst is mainly divided into HC adsorbing performance and adsorbed-HC cleaning capacity. However, the adsorbed-HC cleaning capacity developed by a precious metal as a primary component generally deteriorates in a shorter term. Hence, deterioration diagnosis of the HC adsorbing combustion catalyst is realized by diagnosing the light-off performance in the adsorbed-HC cleaning capacity of the HC adsorbing combustion catalyst.

In a ninth form of the engine self-diagnosis system according to the present invention, the catalyst is a lean NOx catalyst, and the catalyst deterioration determining unit determines that the lean NOx catalyst has deteriorated, when the catalyst temperature T0 at which the exhaust cleaning rate is not smaller than the predetermined value exceeds a predetermined temperature (see Fig. 4).

Thus, this ninth form is based on the fact that the light-off performance in the NOx storage capacity of the lean NOx catalyst also depends on the precious metal in the catalyst.

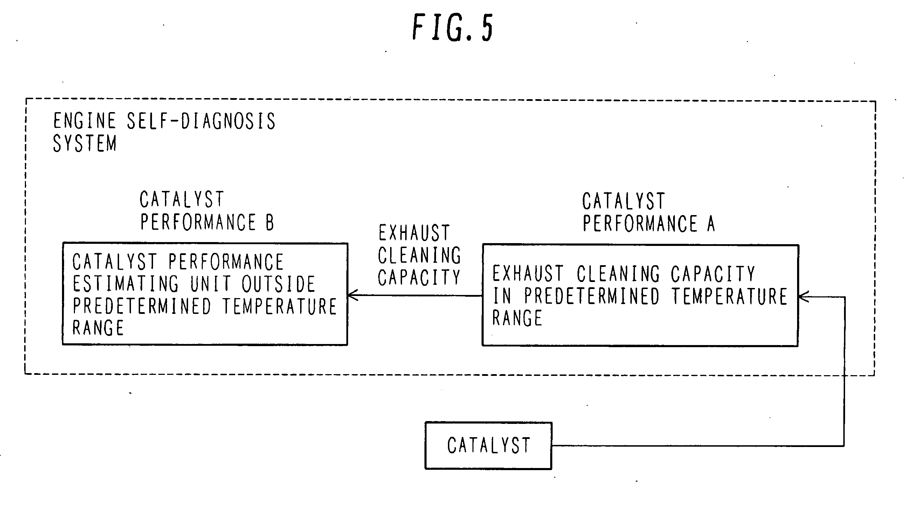

It is suggested, that the exhaust cleaning capacity after-light-off is exhaust cleaning capacity (see Fig. 5).

Thus, the performance detected after the catalyst temperature exceeds the predetermined temperature (i.e., after the light-off) is defined as the exhaust cleaning capacity of the catalyst.

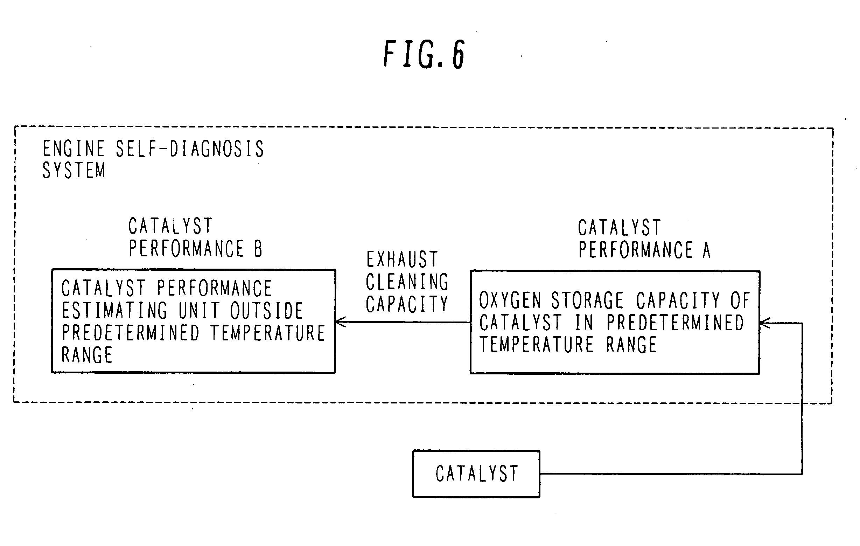

In a tenth form of the engine self-diagnosis system according to the present invention, the exhaust cleaning capacity after-light-off is oxygen storage capacity (see Fig. 6).

Thus, in the tenth form, the performance detected after the catalyst temperature exceeds the predetermined temperature (i.e., after the light-off) is defined as the oxygen storage capacity of the catalyst. The oxygen storage capacity (OSC) of a catalyst is decided depending on both the specific surface area (dispersibility) of a precious metal used in the catalyst and the content of an auxiliary catalyst such as ceria (or zirconia). Because the content of the auxiliary catalyst is hardly changed from the initial value, the OSC is substantially decided by sintering (cohesion) of the precious metal. Accordingly, the light-off performance of the catalyst is estimated in terms of a sintering degree of the precious metal by diagnosing the OSC.

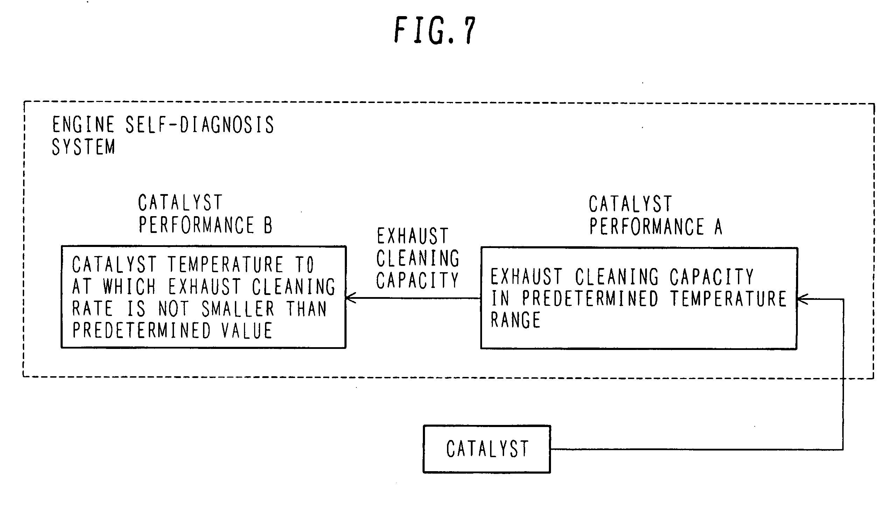

It is suggested, that the exhaust cleaning capacityafter-light-off is given as exhaust cleaning capacity, and the catalyst light-off temperature is given as the catalyst temperature T0 at which the exhaust cleaning rate is not smaller than the predetermined value (see Fig. 7).

Thus, the performance detected after the catalyst temperature exceeds the predetermined temperature (i.e., after the light-off) is defined as the exhaust cleaning capacity of the catalyst, and the catalyst light-off temperature estimated from the exhaust cleaning capacity after the light-off is specifically defined as the light-off temperature.

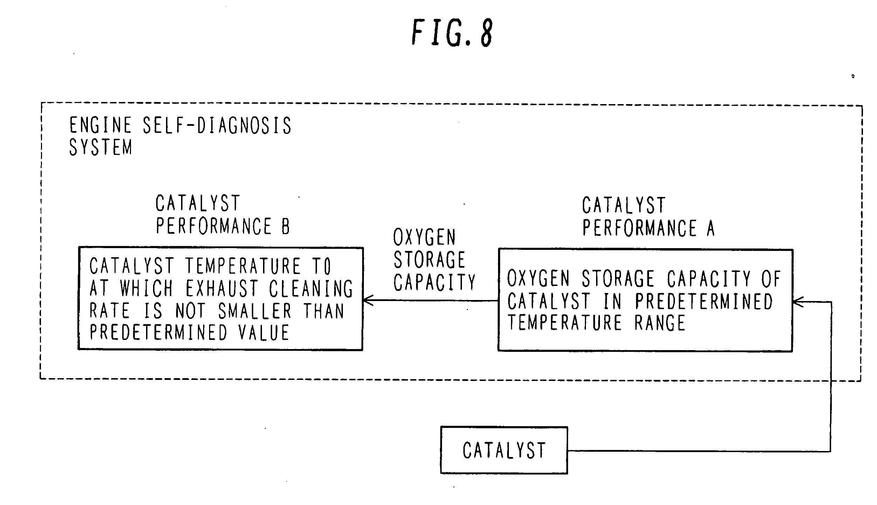

It is suggest, that the exhaust cleaning capacity after-light-off is given as oxygen storage capacity, and the catalyst light-off temperature is given as the catalyst temperature T0 at which the exhaust cleaning rate is not smaller than the predetermined value or the oxygen storage capacity is not smaller than a predetermined value (see Fig. 8).

Thus, the performance detected after the catalyst temperature exceeds the predetermined temperature (i.e., after the light-off) is defined as the oxygen storage capacity of the catalyst, and the catalyst light-off temperature estimated from the oxygen storage capacity after the light-off is specifically defined as the light-off temperature.

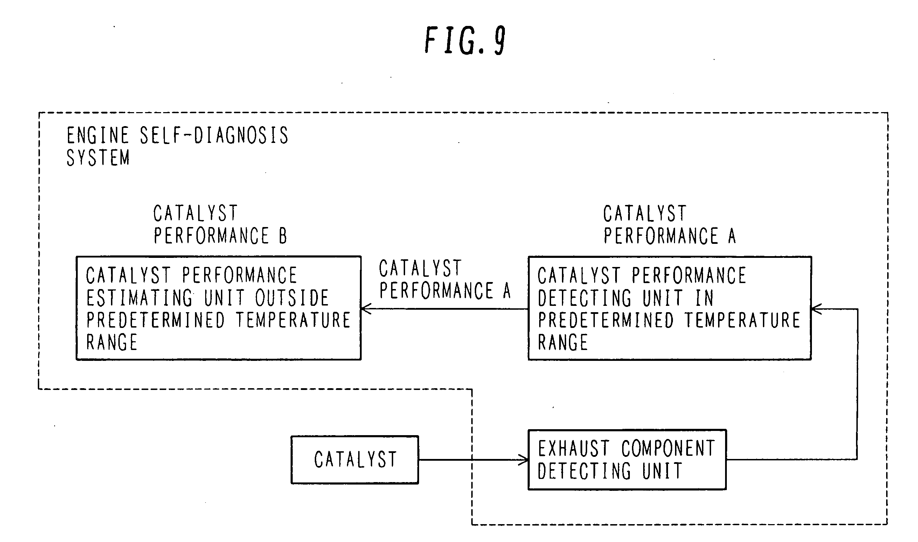

In an eleventh form of the engine self-diagnosis system according to the present invention, the system further comprises an exhaust component detecting unit disposed downstream of the catalyst (see Fig. 9).

Thus, in the eleventh form, exhaust components downstream of the catalyst are directly detected by the exhaust component detecting unit, and the exhaust cleaning rate after the light-off is detected based on the detected exhaust components. Then, the light-off performance is estimated based on the detected cleaning capacity.

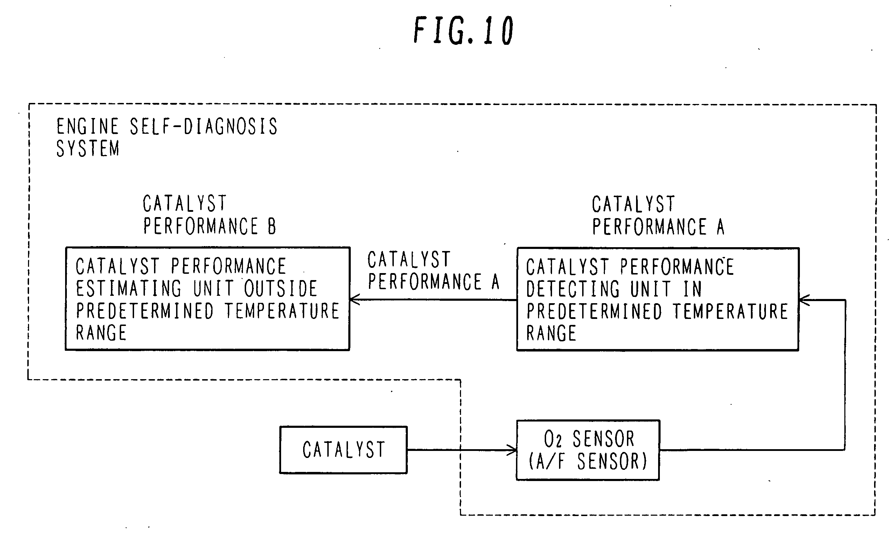

In a twelfth form of the engine self-diagnosis system according to the present invention, the system further comprises an O₂ sensor or an A/F sensor downstream of the catalyst (see Fig. 10).

Thus, in the twelfth form, the A/F ratio downstream of the catalyst is directly detected by the O₂ sensor or the A/F sensor, and the exhaust cleaning capacity after the light-off is detected based on the detected A/F ratio. Then, the light-off performance is estimated based on the detected cleaning capacity.

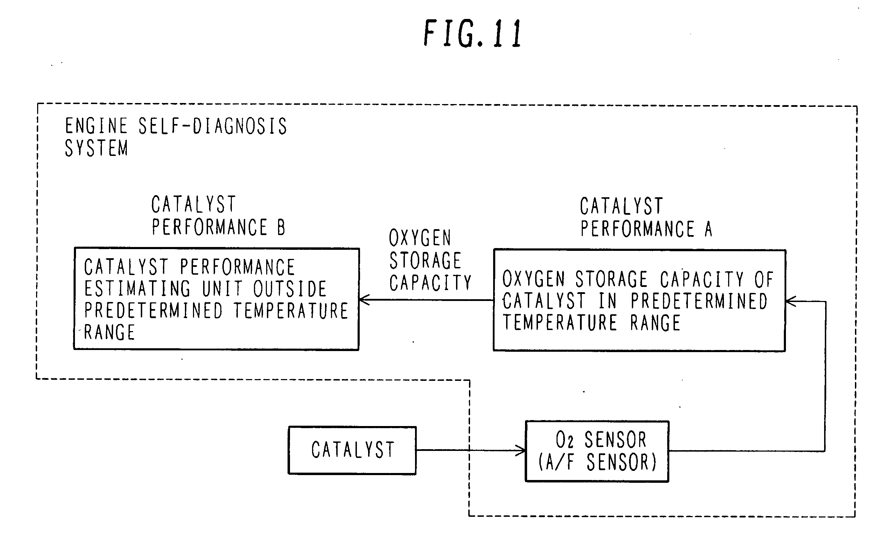

In a thirteenth form of the engine self-diagnosis system according to the present invention, the system further comprises a unit for detecting oxygen storage capacity of the catalyst based on an output signal from the O₂ sensor or the A/F sensor (see Fig. 11).

Thus, in the thirteenth form, the A/F ratio downstream of the catalyst is directly detected by the O₂ sensor or the A/F sensor, and the oxygen storage capacity of the catalyst after the light-off is detected based on the detected A/F ratio. Then, the light-off performance is estimated based on the detected oxygen storage capacity.

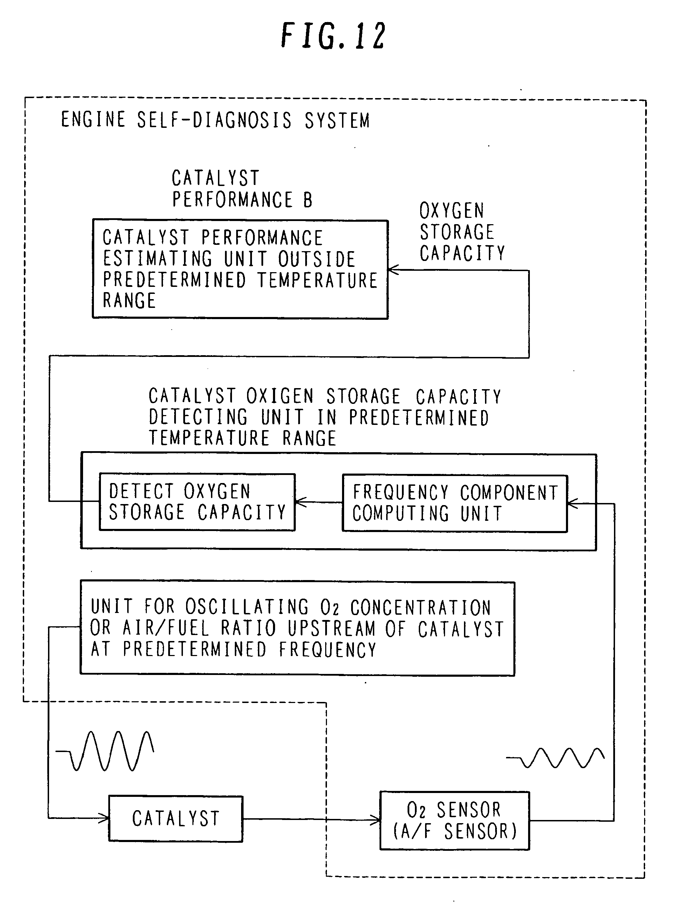

In a fourteenth form of the engine self-diagnosis system according to the present invention, the system further comprises a unit for oscillating an O₂ concentration or an air/fuel ratio upstream of the catalyst at a predetermined frequency; a unit for computing a component at the predetermined frequency of the output signal from the O₂ sensor or the A/F sensor; and/or a unit for detecting oxygen storage capacity of the catalyst based on the computed component at the predetermined frequency (see Fig. 12).

When the O₂ concentration or the air/fuel ratio upstream of the catalyst is oscillated at the predetermined frequency, the oscillation of the O₂ concentration or the air/fuel ratio downstream of the catalyst exhibits behaviors differing from those upstream of the catalyst due to the oxygen storage capacity of the catalyst if the catalyst (oxygen storage capacity) is in the light-off state. Based on that finding, in the seventeenth form, the oxygen storage capacity is detected by executing frequency analysis of the oscillation of the O₂ concentration or the air/fuel ratio downstream of the catalyst, and the light-off performance is estimated based on the detected oxygen storage capacity.

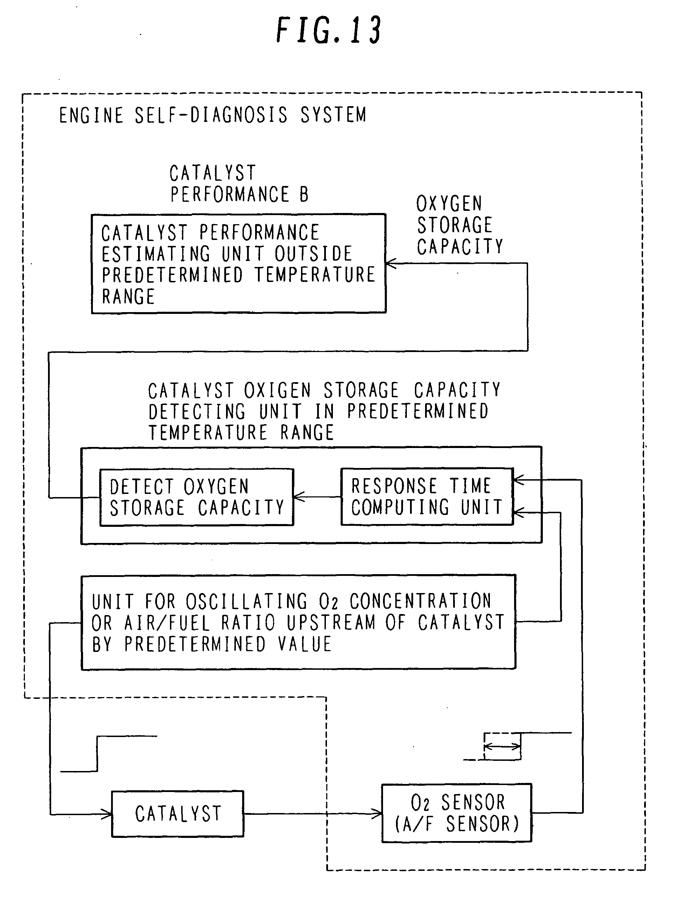

In an fifteenth form of the engine self-diagnosis system according to the present invention, the system further comprises a unit for changing an O₂ concentration or an air/fuel ratio upstream of the catalyst by a predetermined value; a response delay time computing unit for computing a response delay time from a time at which the O₂ concentration or the air/fuel ratio upstream of the catalyst is changed by a predetermined value to a time at which an output signal from the O₂ sensor downstream of the catalyst is changed by a predetermined value; and/or a unit for detecting oxygen storage capacity of the catalyst based on the computed response delay time (Fig. 13).

When the O₂ concentration or the air/fuel ratio upstream of the catalyst is changed by the predetermined value, the response delay time until the O₂ concentration or the air/fuel ratio downstream of the catalyst is changed depends on the oxygen storage capacity of the catalyst if the catalyst (oxygen storage capacity) is in the light-off state. Based on that finding, in the eighteenth form, the oxygen storage capacity is detected by determining the response delay time until the O₂ concentration or the air/fuel ratio downstream of the catalyst is changed, and the light-off performance is estimated based on the detected oxygen storage capacity.

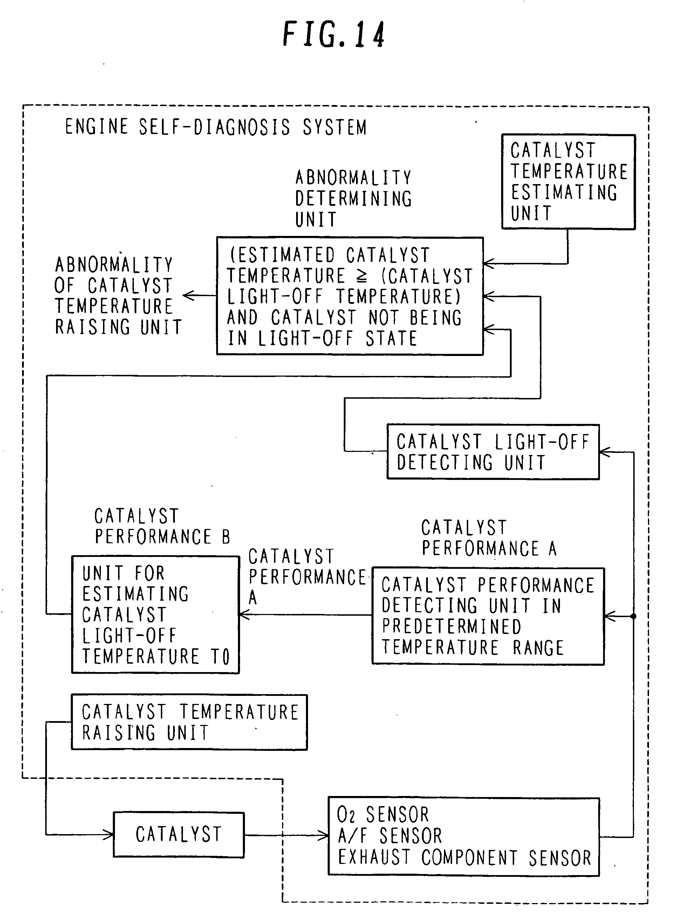

In a sixteenth form of the engine self-diagnosis system according to the present invention, the system further comprises a unit for raising temperature of the catalyst; a catalyst temperature estimating unit; an O₂ sensor, an A/F sensor, or an exhaust sensor disposed downstream of the catalyst; a unit for directly detecting, based on an output signal from the O₂ sensor, the A/F sensor, or the exhaust sensor, whether the exhaust cleaning rate of the catalyst is not smaller than a predetermined value and the catalyst is in the light-off state; and/or an abnormality determining unit for determining the catalyst temperature raising unit to be abnormal, when the unit for directly detecting the catalyst light-off does not detect that the catalyst is in the light-off state. (see Fig. 14).

Thus, the sixteenth form is intended to distinctly detect whether the light-off performance of the catalyst has deteriorated or the unit for activating the catalyst in a shorter time (i.e., the catalyst temperature raising unit) has deteriorated. Specifically, when the estimated catalyst temperature (not actual temperature) reaches the estimated light-off temperature, the catalyst should have been (normally) brought into the light-off state. Taking into account that point, whether the catalyst is in the light-off state or not is detected by using, e.g., the O₂ sensor, the A/F sensor, or the exhaust sensor. If the detection result shows that the catalyst is not in the light-off state, this is determined as indicating that the catalyst temperature does not reach the light-off temperature. Then, the catalyst temperature raising unit is determined to be abnormal.

In a seventeenth form of the engine self-diagnosis system according to the present invention, the system further comprises a unit for indicating the exhaust cleaning capacity after-light-off and/or light-off temperature or information related to the exhaust cleaning capacity after-light-off and/or light-off temperature.

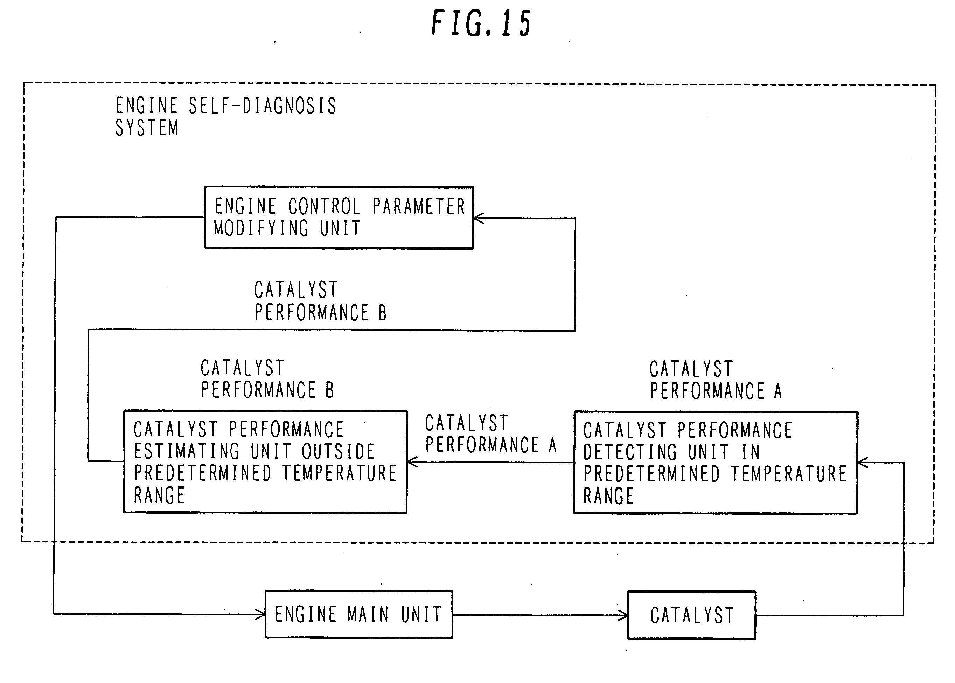

In a eighteenth form of the engine self-diagnosis system according to the present invention, the system further comprises a unit for modifying an engine control parameter based on the exhaust cleaning capacity after-light-off and/or light-off temperature (see Fig. 15).

Thus, the engine control parameter is modified based on the catalyst performance determined as described above, to thereby further reduce particular components (HC, CO and NOx) in engine exhaust.

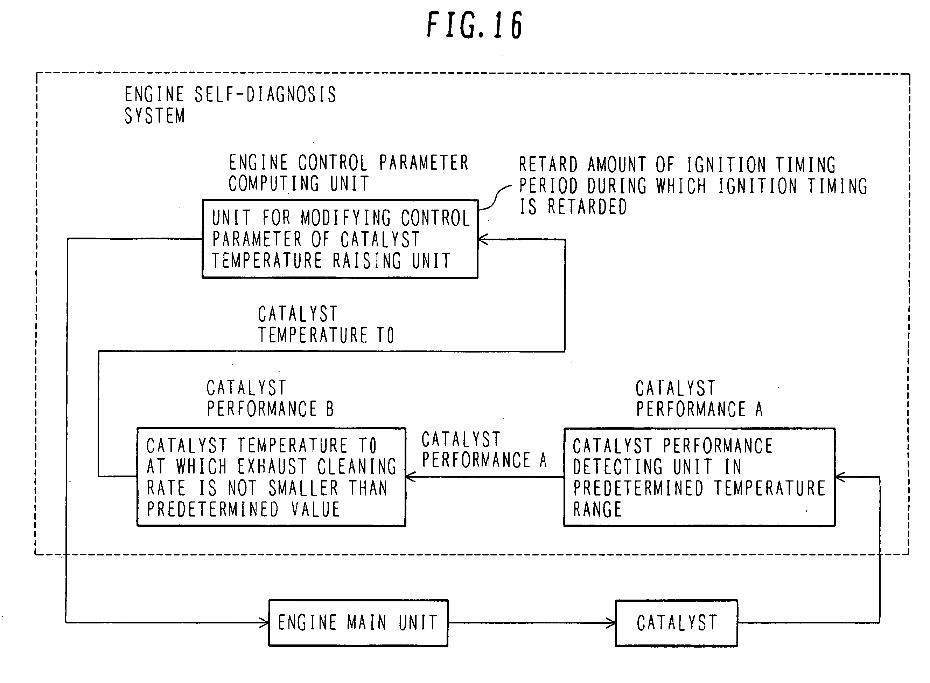

In a nineteenth form of the engine self-diagnosis system according to the present invention, the system further comprises a unit for modifying a control parameter for the catalyst temperature raising unit based on the catalyst light-off temperature (see Fig. 16).

Thus, in the nineteenth form, for example, a control parameter for engine startup is modified based on the catalyst light-off performance estimated as described above.

In a twentieth form of the engine self-diagnosis system according to the present invention, the control parameter for the catalyst temperature raising unit is a retard amount of ignition timing and/or a period during which the ignition timing is retarded (see Fig. 16).

Thus, in the twentieth form, for example, the retard amount of ignition timing and/or the period during which the ignition timing is retarded is modified based on the catalyst light-off performance estimated as described above, to thereby activate the catalyst in a shorter time.

In addition, the present invention also provides an automobile equipped with the engine self-diagnosis system constituted as described above.

With the engine self-diagnosis system according to the present invention, the exhaust cleaning capacity after-light-off after the light-off of the catalyst is detected for diagnosis, and the catalyst performance before or during the light-off (i.e., the catalyst light-off temperature) is estimated based on the result of the detection and diagnosis. Therefore, the light-off performance of the catalyst can be diagnosed at a low cost and high accuracy without requiring addition or improvement of a sensor, etc.

The above described forms and features of the invention can be combined in any way as a whole or in part without departing from the scope of the disclosure of the invention.

### BRIEF DESCRIPTION OF THE DRAWINGS

Fig. 1 is a block diagram showing first through fourth forms of an engine self-diagnosis system according to the present invention;
Fig. 2 is a block diagram showing a fifth form of the engine self-diagnosis system according to the present invention;
Fig. 3 is a block diagram showing a sixth form of the engine self-diagnosis system according to the present invention;
Fig. 4 is a block diagram showing seventh to ninth forms of the engine self-diagnosis system according to the present invention;
Fig. 5 is a block diagram showing an engine self-diagnosis system;
Fig. 6 is a block diagram showing a tenth form of the engine self-diagnosis system according to the present invention;
Fig. 7 is a block diagram showing an engine self-diagnosis system;
Fig. 8 is a block diagram showing an engine self-diagnosis system;
Fig. 9 is a block diagram showing an eleventh form of the engine self-diagnosis system according to the present invention;
Fig. 10 is a block diagram showing a twelfth form of the engine self-diagnosis system according to the present invention;
Fig. 11 is a block diagram showing a thirteenth form of the engine self-diagnosis system according to the present invention;
Fig. 12 is a block diagram showing a fourteenth form of the engine self-diagnosis system according to the present invention;
Fig. 13 is a block diagram showing a fifteenth form of the engine self-diagnosis system according to the present invention;
Fig. 14 is a block diagram showing a sixteenth form of the engine self-diagnosis system according to the present invention;
Fig. 15 is a block diagram showing an eighteenth form of the engine self-diagnosis system according to the present invention;
Fig. 16 is a block diagram showing nineteenth and twentieth forms of the engine self-diagnosis system according to the present invention;
Fig. 17 is a graph showing the relationship between the catalyst temperature and the OSC index for explaining the diagnosis principle in the present invention;
Fig. 18 is a schematic view showing an engine self-diagnosis system according to a first embodiment of the present invention, along with an engine to which the self-diagnosis system is applied;
Fig. 19 is a block diagram showing the internal configuration of a control unit in the first embodiment of the present invention;
Fig. 20 is a block diagram showing a control system in the first embodiment;
Fig. 21 is a block diagram for explaining a basic fuel injection amount computing unit in the first embodiment;
Fig. 22 is a block diagram for explaining a deterioration diagnosis permission determining unit in the first embodiment;
Fig. 23 is a block diagram for explaining an air/fuel ratio modification term computing unit in the first embodiment;
Fig. 24 is a block diagram for explaining a target air/fuel ratio computing unit in the first embodiment;
Fig. 25 is a block diagram for explaining a unit for detecting the oxygen storage capacity after the light-off in the first embodiment;
Fig. 26 is a block diagram for explaining a frequency component computing unit in the first embodiment;
Fig. 27 is a block diagram for explaining an oxygen storage capacity computing unit in the first embodiment;
Fig. 28 is a block diagram for explaining a light-off temperature estimating unit in the first embodiment;
Fig. 29 is a block diagram showing a control system in a second embodiment;
Fig. 30 is a block diagram for explaining a target air/fuel ratio computing unit in the second embodiment;
Fig. 31 is a block diagram for explaining a unit for detecting the oxygen storage capacity after the light-off in the second embodiment;
Fig. 32 is a block diagram for explaining a response delay time computing unit in the second embodiment;
Fig. 33 is a block diagram for explaining an oxygen storage capacity computing unit in the second embodiment;
Fig. 34 is a block diagram showing a control system in a third embodiment;
Fig. 35 is a block diagram for explaining a light-off temperature estimating unit in the third embodiment;
Fig. 36 is a block diagram showing a control system in a fourth embodiment;
Fig. 37 is a block diagram for explaining a deterioration diagnosis permission determining unit in the fourth embodiment;
Fig. 38 is a block diagram for explaining a light-off temperature estimating unit in the fourth embodiment; and
Fig. 39 is a block diagram for explaining an ignition timing setting unit in the fourth embodiment.

### DESCRIPTION OF THE PREFERRED EMBODIMENTS

Embodiments of the present invention will be described below with reference to the drawings.

### (First Embodiment)

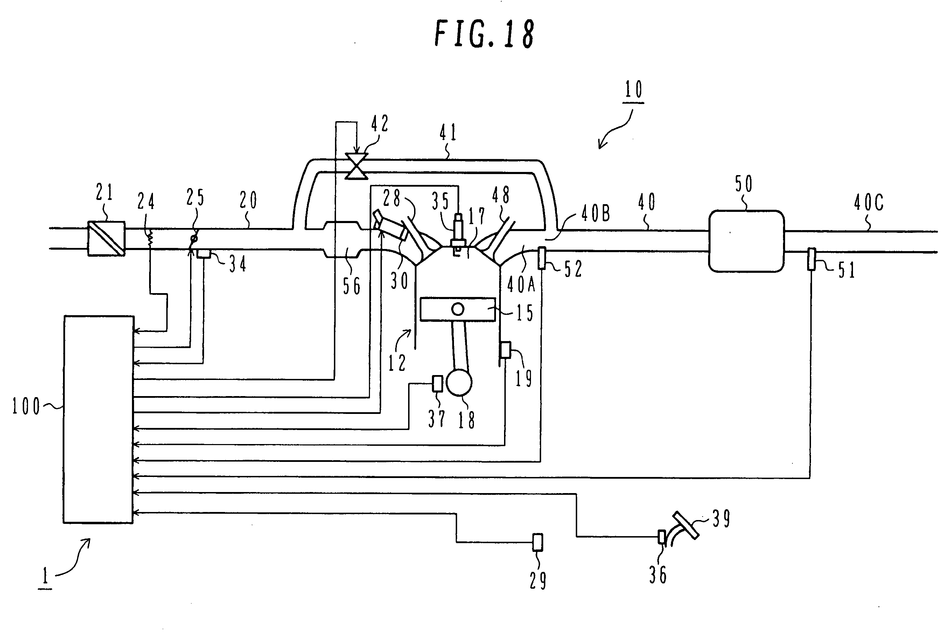

Fig. 18 is a schematic view showing an engine self-diagnosis system according to a first embodiment of the present invention, along with one example of a vehicle-loaded engine to which the self-diagnosis system is applied.

An engine 10 shown in Fig. 18 is a multi-cylinder engine having four cylinders, for example, and comprises cylinders 12 and pistons 15 slidably inserted in the cylinders 12 numbered #1, #2, #3 and #4. A combustion chamber 17 is defined above the piston 15. An ignition plug 35 is disposed to face the combustion chamber 17.

Air supplied for combustion of fuel is taken in from an air cleaner 21 disposed at a start end of an intake passage 20 and enters a collector 56 through an airflow sensor 24 and an electronically-controlled throttle valve 25. Then, the intake air is introduced from the collector 56 to the combustion chamber 17 of each cylinder numbered #1, #2, #3 or #4 through an intake valve 28 that is disposed at a downstream end of the intake passage 20 (i.e., at an intake port). Further, a fuel injection valve 30 is disposed at the downstream end of the intake passage 20.

A gas mixture of the air introduced to the combustion chamber 17 and fuel injected from the fuel injection valve 30 is ignited by the ignition plug 35 and is burnt for explosion. Combustion waste gas (exhaust gas) is discharged through an exhaust valve 48 from the combustion chamber 17 to each individual passage portion 40A forming an upstream part of an exhaust passage 40. Then, the exhaust gas flows from the individual passage portion 40A into a three-way catalyst 50, which is disposed in the exhaust passage 40, through an exhaust collecting portion 40B. After cleaning by the three-way catalyst 50, the exhaust gas is discharged to the exterior.

An O₂ sensor 51 is disposed in the exhaust passage 40 downstream of the three-way catalyst 50, and an A/F (air/fuel ratio) sensor 52 is disposed in the exhaust passage 40 upstream of the three-way catalyst 50 at a position near the exhaust collecting portion 40B.

The A/F sensor 52 has a linear output characteristic for the concentration of oxygen contained in the exhaust gas. Because the relationship between the concentration of oxygen in the exhaust gas and the air/fuel ratio is substantially linear, the air/fuel ratio in the exhaust collecting portion 40B can be determined based on a signal from the A/F sensor 52 for detecting the oxygen concentration. Also, based on a signal from the O₂ sensor 51, it is possible to detect the oxygen concentration downstream of the three-way catalyst 50, or whether the exhaust gas is rich or lean with respect to the stoichiometric air/fuel ratio.

Further, a part of the exhaust gas discharged from the combustion chamber 17 to the exhaust passage 40 is introduced to the intake passage 20 through an EGR passage 41, as required, for circulation to the combustion chamber 17 of each cylinder through a branched passage portion of the intake passage 20. An EGR valve 42 for adjusting the EGR rate is disposed in the EGR passage 41.

A self-diagnosis system 1 of this embodiment comprises a control unit 100 with a microcomputer incorporated therein for executing various kinds of control of the engine 10.

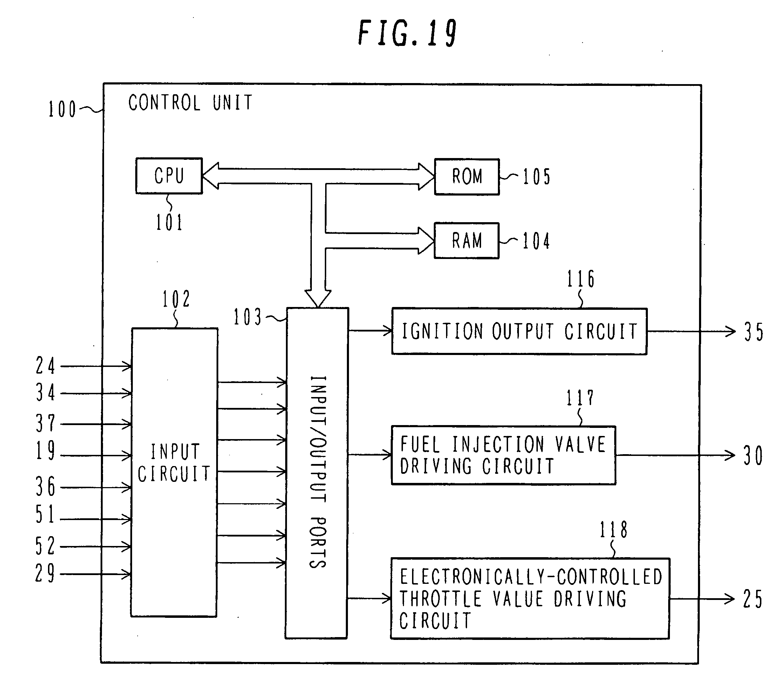

The control unit 100 basically comprises, as shown in Fig. 19, a CPU 101, an input circuit 102, input/output ports 103, a RAM 104, a ROM 105, etc.

The control unit 100 is supplied with, as input signals, a signal detected by the airflow sensor 24 and corresponding to the intake air amount, a signal detected by a throttle sensor 34 and corresponding to the opening degree of the throttle valve 25, a signal detected by a crank angle sensor 37 and indicating the rotation (engine rotation speed)/phase of a crankshaft 18, a signal detected by the O₂ sensor 51 disposed in the exhaust passage 40 downstream of the three-way catalyst 50 and corresponding to the oxygen concentration in the exhaust gas, a signal detected by the A/F sensor 52 disposed in the exhaust collecting portion 40B of the exhaust passage 40 upstream of the three-way catalyst 50 and corresponding to the oxygen concentration (air/fuel ratio), a signal detected by a water temperature sensor 19 disposed in the cylinder 12 and corresponding to the temperature of the engine cooling water, a signal detected by an accelerator sensor 36 and corresponding to the amount of depression of an accelerator pedal 39 (which represents a torque demanded by a driver), and a signal detected by a vehicle speed sensor 29 and corresponding to the vehicle speed of an automobile in which the engine 10 is mounted.

In the control unit 100, when the signals outputted from the various sensors, such as the A/F sensor 52, the O₂ sensor 51, the throttle sensor 34, the airflow sensor 24, the crank angle sensor 37, the water temperature sensor 19 and the accelerator sensor 36, are inputted, those signals are subjected to signal processing, e.g., removal of noise, in the input circuit 102 and then sent to the input/output ports 103. Respective values at the input ports are stored in the RAM 104 and are subjected to arithmetic/logical operations in the CPU 101. A control program describing the contents of the arithmetic/logical operations is written in the ROM 105 beforehand. Values computed in accordance with the control program and representing strokes of various actuators to be operated are stored in the RAM 104 and are sent to the output ports 103.

A signal for operating the ignition plug 35 is set as an on/off signal such that it is turned on when a current is supplied to a primary coil in an ignition output circuit 116 and turned off when a current is not supplied to the primary coil. The ignition timing is defined as a time at which the signal is shifted from the on- to off-state. The signal for operating the ignition plug 35, which has been set at the output port 103, is amplified by an ignition output circuit 116 to a level of energy sufficient for ignition and is then supplied to the ignition plug 35. Also, a signal for driving the fuel injection valve 30 (i.e., an air/fuel ratio control signal) is set as an on/off signal such that it is turned on when the fuel injection valve 30 is opened and turned off when it is closed. The driving signal is amplified by a fuel injection valve driving circuit 117 to a level of energy sufficient for opening the fuel injection valve 30 and is then supplied to the fuel injection valve 30. A driving signal for realizing the target opening degree of the electronically-controlled throttle valve 25 is sent to the electronically-controlled throttle valve 25 through an electronically-controlled throttle valve driving circuit 118.

The control unit 100 computes the air/fuel ratio upstream of the three-way catalyst 50 based on the signal from the A/F sensor 52, and also computes, based on the signal from the O₂ sensor 51, the oxygen concentration downstream of the three-way catalyst 50, or whether the exhaust gas is rich or lean with respect to the stoichiometric air/fuel ratio. Further, by using the outputs of both the sensors 51, 52, the control unit 100 executes feedback control for sequentially modifying the fuel injection amount or the intake air amount so that the cleaning efficiency of the three-way catalyst 50 is optimized.

Performance diagnosis of the three-way catalyst 50 executed by the control unit 100 will be described in more detail below.

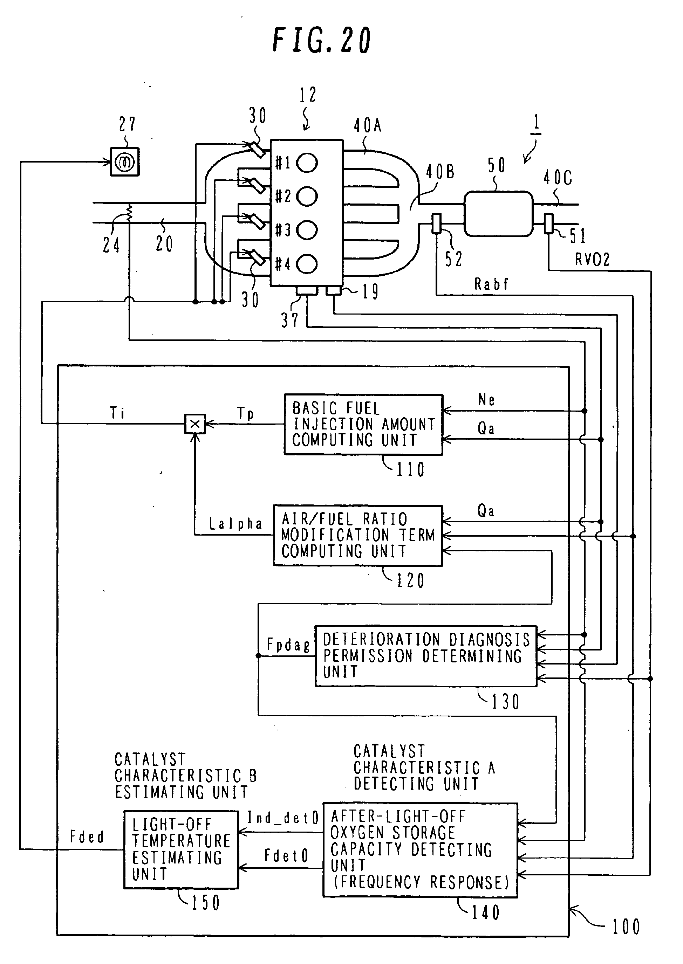

Fig. 20 is a functional block diagram showing a control system in the first embodiment. As shown in the functional block diagram, the control unit 100 comprises a basic fuel injection amount computing unit 110, an air/fuel ratio modification term computing unit 120, a deterioration diagnosis permission determining unit 130, a catalyst characteristic A (after-light-off oxygen storage capacity) detecting unit 140, and a catalyst characteristic B (light-off temperature) estimating unit 150.

In an ordinary mode, the control unit 100 computes a fuel injection amount Ti for each of the cylinders #1-#4 based on a basic fuel injection amount Tp and an air/fuel ratio modification term Lalpha so that air/fuel ratios of all the cylinders are held at the stoichiometric air/fuel ratio. Then, when deterioration diagnosis is permitted, the control unit 100 oscillates the target air/fuel ratio at a predetermined frequency and estimates the after-light-off oxygen storage capacity (catalyst performance A) of the three-way catalyst 50 in accordance with predetermined frequency components of respective output signals from the A/F sensor 52 and the O₂ sensor 51. Then, based on the detection result, the control unit 100 estimates the light-off temperature.

Each of the processing units will be described in more detail below.

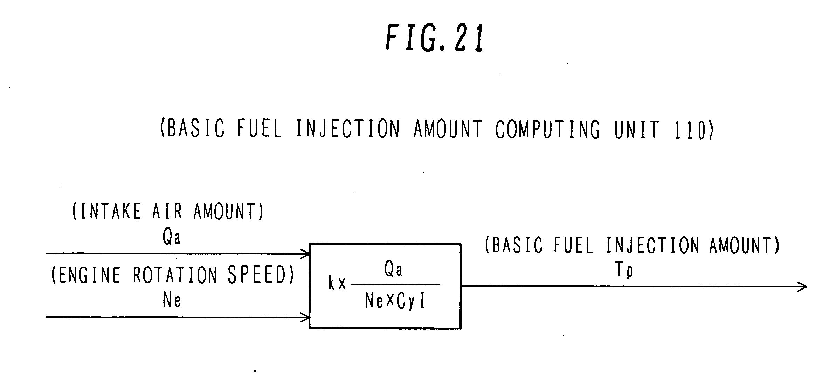

### <Basic Fuel Injection Amount Computing Unit 110 (Fig. 21)>

This computing unit 110 computes, based on the engine intake air amount, the fuel injection amount for realizing the target torque and the target air/fuel ratio at the same time under arbitrary operating conditions. Specifically, a basic fuel injection amount Tp is computed as shown in Fig. 21. In Fig. 21, K is a constant having a value for making adjustment such that the stoichiometric air/fuel ratio is always realized with respect to the intake air amount. Also, Cyl represents the number of engine cylinders.

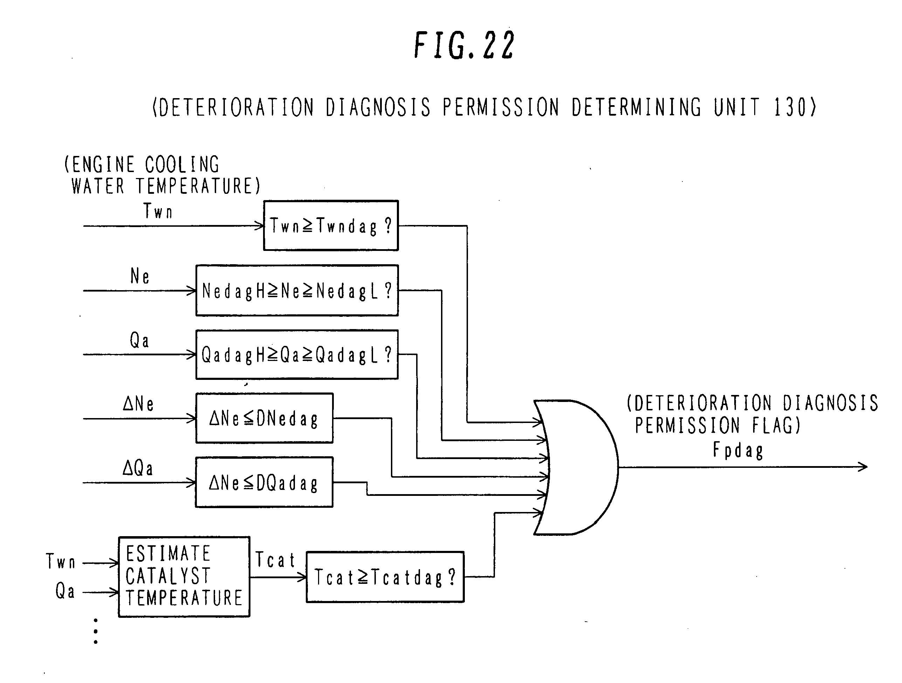

### <Deterioration Diagnosis Permission Determining Unit 130 (Fig. 22)>

This permission determining unit 130 determines whether the deterioration diagnosis of the three-way catalyst 50 is permitted.

Specifically, as shown in Fig. 22, when Twn ≥ Twndag, NedagH ≥ Ne ≥ NedagL, QadagH ≥ Qa ≥ QadagL, ΔNe ≤ DNedag, ΔQa ≤ Dqadag, and Tcat ≥ Tcatdag are all satisfied, a deterioration diagnosis permission flag Fpdag = 1 is set to permit the deterioration diagnosis. Otherwise, Fpdag = 0 is set to inhibit the deterioration diagnosis.

In Fig. 22, Twn is the engine cooling water temperature, Ne is the engine rotation speed, Qa is the intake air amount, ΔNe is the change rate of the engine rotation speed, ΔQa is the change rate of the intake air amount, and Tcat is the estimated catalyst temperature.

ΔNe and ΔQa can be each given as the difference between a value computed in the preceding job and a value computed in the current job. Also, because the catalyst temperature depends on the temperature of the exhaust gas flowing into the catalyst and the temperature of the exhaust gas depends on the intake air amount Qa (fuel injection amount), etc., the catalyst temperature can be estimated based on Twn, Qa, an integrated value of Qa, etc. Further details are omitted here for the reason that various methods have already been proposed and are described in many books, papers, etc. Tcatdag is preferably set to a temperature at which the three-way catalyst 50 is in the light-off state at a sufficient level.

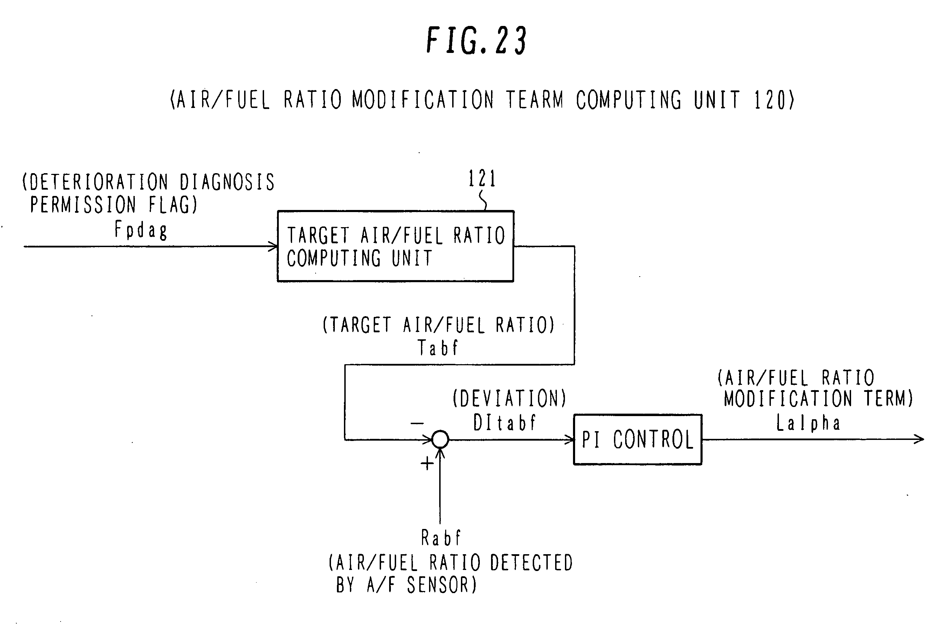

### <Air/Fuel Ratio Modification Term Computing Unit 120 (Fig. 23)>

This computing unit 120 executes F/B (feedback) control based on the air/fuel ratio detected by the A/F sensor 52 so that the air/fuel ratio at an inlet of the three-way catalyst 50 is held at the target air/fuel ratio under arbitrary operating conditions. Specifically, as shown in Fig. 23, an air/fuel ratio modification term Lalpha is computed with PI control from a deviation Dltabf between a target air/fuel ratio Tabf set by a target air/fuel ratio computing unit 121 and an air/fuel ratio Rabf detected by the A/F sensor. The air/fuel ratio modification term Lalpha is multiplied by the basic fuel injection amount Tp.

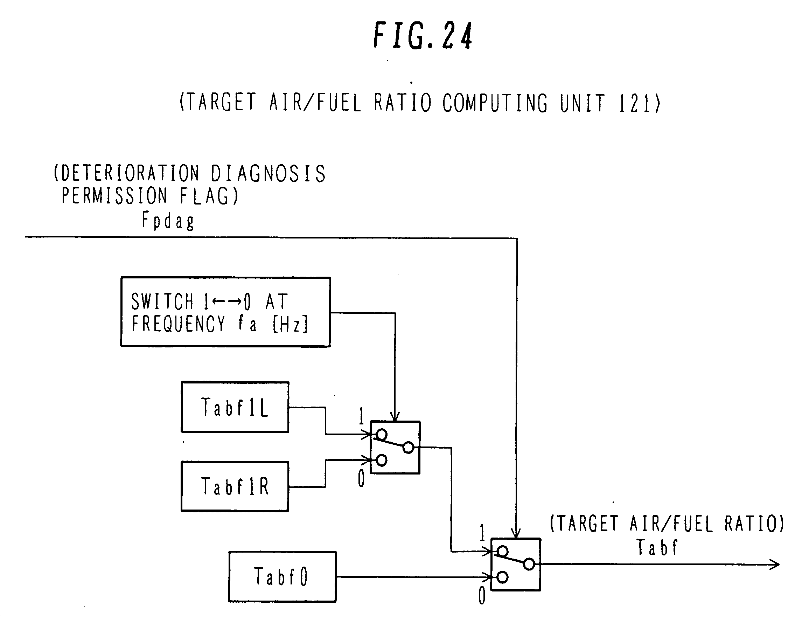

### <Target Air/Fuel Ratio Computing Unit 121 (Frequency Response) (Fig. 24)>

This computing unit 121 computes the target air/fuel ratio in a frequency response manner. Specifically, this computation is executed as shown in Fig. 24. When Fpdag = 1 holds, a target air/fuel ratio Tabf1L and a target air/fuel ratio Tabf1R are switched over at a frequency fa [Hz]. Otherwise, an ordinary target air/fuel ratio Tabf0 is set. In this embodiment, Tabf0 is a value corresponding to the stoichiometric air/fuel ratio, Tabf1R is a value shifted from the stoichiometric air/fuel ratio toward the rich side by a predetermined value, and Tabf1L is a value shifted from the stoichiometric air/fuel ratio toward the lean side by a predetermined value. The values of Tabf1R(L) and fa are preferably decided based on experiments from the viewpoints of diagnosis accuracy and exhaust performance (emission characteristics).

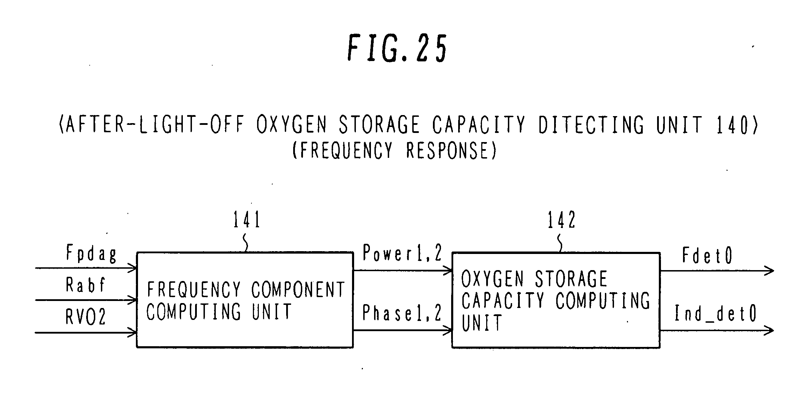

### <After-Light-Off Oxygen Storage capacity Detecting Unit 140 (Frequency Response) (Fig. 25)>

This detecting unit 140 detects the oxygen storage capacity after the light-off. Specifically, this detection is executed as shown in Fig. 25. This detecting unit 140 comprises a frequency component computing unit 141 for computing respective frequency components of an output Rabf of the A/F sensor 52 and an output RVO2 of the O₂ sensor 51, and an oxygen storage capacity computing unit 142 for computing the oxygen storage capacity of the three-way catalyst 50 based on the computed frequency components.

The frequency component computing unit 141 and the oxygen storage capacity computing unit 142 will be described below.

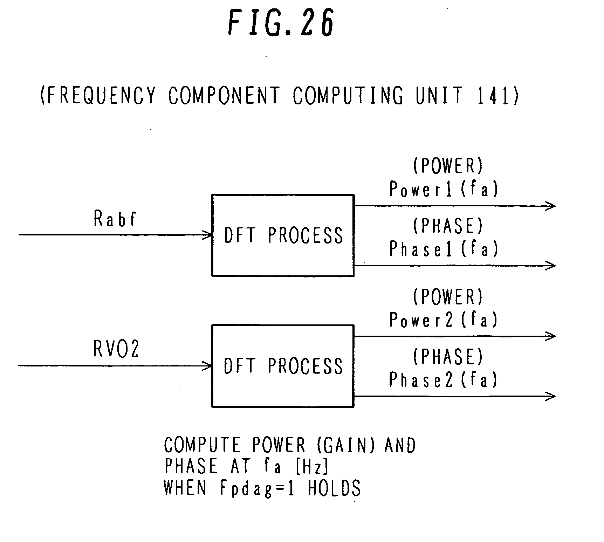

### <Frequency Component Computing Unit 141 (Fig. 26)>

This computing unit 141 computes respective frequency components of the output Rabf of the A/F sensor 52 and the output RVO2 of the O₂ sensor 51. Specifically, as shown in Fig. 26, powers (Power1 and Power2) and phases (Phase1 and Phase2) at the frequency fa [Hz] are computed from both signals Rabf and RVO2 with processes using DFT (Discrete Fourier Transform).

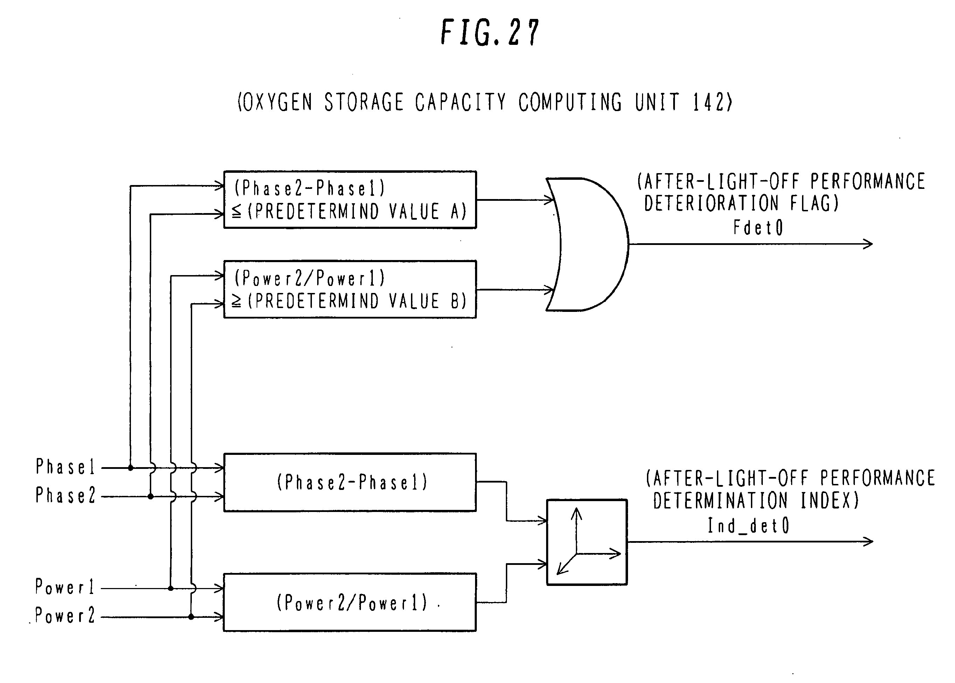

### <Oxygen Storage capacity Computing Unit 142 (Fig. 27)>

This computing unit 142 computes the oxygen storage capacity of the three-way catalyst 50. Specifically, as shown in Fig. 27, an after-light-off performance deterioration index Ind_det0 is obtained by referring to a map with (Phase2 - Phase1) and (Power2/Power1) being parameters. The map used in obtaining Ind_det0 is preferably decided based on experiments from the relationship between the oxygen storage capacity of the three-way catalyst 50 and the exhaust performance. Also, in the state of (Phase2 - Phase1) ≥ (predetermined value A) and (Power2/Power1) ≥ (predetermined value B), this is determined as indicating that the oxygen storage capacity (catalyst performance) has deteriorated to a limit, whereupon an after-light-off performance deterioration flag Fdet0 = 1 is set. Note that the predetermined value A and the predetermined value B representing the deterioration limit are decided depending on the target exhaust performance (diagnosis performance).

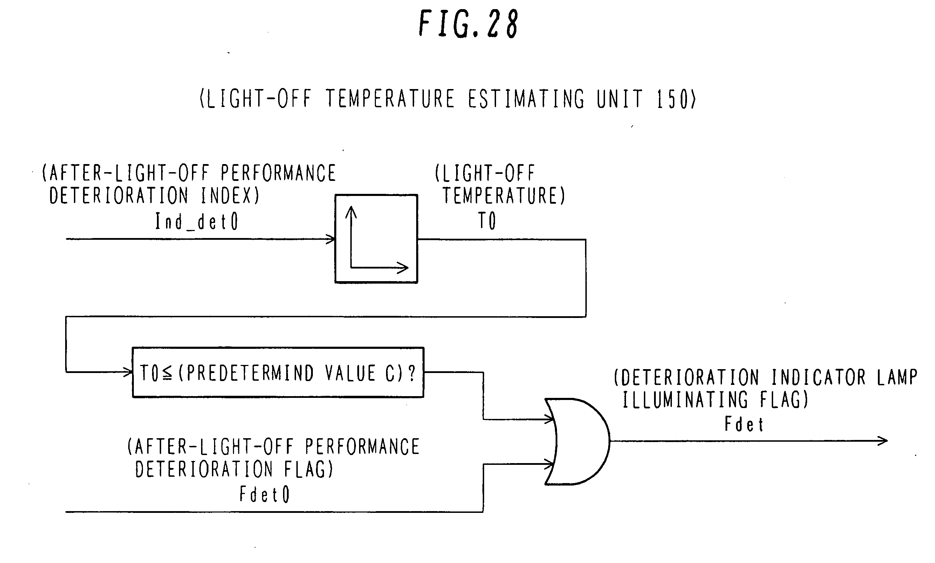

### <Light-Off Temperature Estimating Unit 150 (Fig. 28)>

This computing unit 150 computes (estimates) the light-off temperature of the three-way catalyst 50. Specifically, as shown in Fig. 28, a (estimated) light-off temperature T0 is obtained, for example, by using a map with the after-light-off performance deterioration index Ind_det0 being a parameter. The map used in obtaining T0 is preferably decided based on experiment results shown in Fig. 17, by way of example, from the relationship between a deterioration amount of the oxygen storage capacity after the light-off and a change (rise) amount of the light-off temperature. As an alternative, T0 may be estimated using, e.g., a catalyst model. Also, in the state of T0 ≥ (predetermined value C) or the after-light-off performance deterioration flag Fdet0 = 1, this is determined as indicating that the three-way catalyst 50 has exceeded its performance limit, whereupon a deterioration indicator lamp illuminating flag Fdet = 1 is set, for example, to illuminate a deterioration indicator lamp 27 for providing an indication to the exterior. Note that the predetermined value C representing the deterioration limit (in light-off performance) of the three-way catalyst 50 is decided depending on the target exhaust performance (diagnosis performance).

As understood from the above description, with the self-diagnosis system 10 of this embodiment, the target air/fuel ratio is oscillated at the predetermined frequency, and the after-light-off oxygen storage capacity (catalyst performance A) of the three-way catalyst 50 is detected in accordance with the predetermined frequency components of the output signals from the A/F sensor 52 and the O₂ sensor 51. The light-off temperature (catalyst performance B) is then estimated based on the detection result. Therefore, the light-off performance of the catalyst can be diagnosed at a low cost and high accuracy without requiring addition or improvement of a sensor, etc.

### (Second Embodiment)

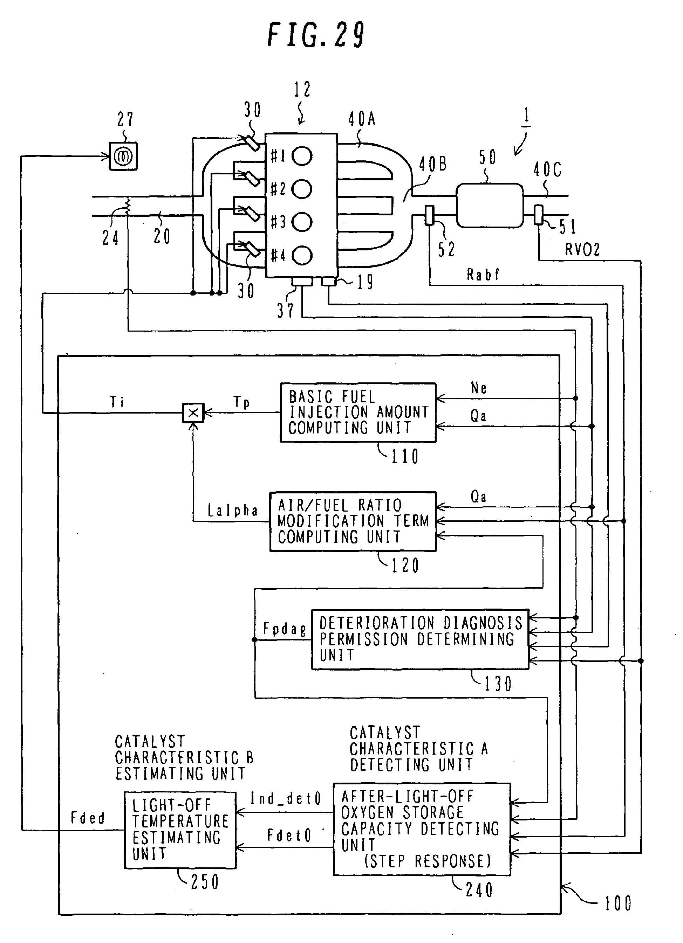

Fig. 29 is a functional block diagram showing a control system in a second embodiment. As shown in the functional block diagram, a control unit 100 similar to that in the first embodiment comprises a basic fuel injection amount computing unit 110, an air/fuel ratio modification term computing unit 120 including a target air/fuel ratio computing unit 221, a deterioration diagnosis permission determining unit 130, (the units 110 and 130 being the same as those in the first embodiment), a catalyst characteristic A (after-light-off oxygen storage capacity) detecting unit 240, and a catalyst characteristic B (light-off temperature) estimating unit 250.

In an ordinary mode, the control unit 100 computes a fuel injection amount Ti per cylinder based on a basic fuel injection amount Tp and an air/fuel ratio modification term Lalpha so that air/fuel ratios of all the cylinders are held at the stoichiometric air/fuel ratio. While that process is the same as that in the first embodiment, this second embodiment differs in the following point. When the deterioration diagnosis is permitted, the air/fuel ratio is shifted from the stoichiometric air/fuel ratio by a predetermined value for a predetermined time, and the after-light-off oxygen storage capacity (catalyst performance A) of the three-way catalyst 50 is detected in accordance with a response delay time between respective output signals from the A/F sensor 52 and the O₂ sensor 51. Then, based on the detection result, the control unit 100 estimates the light-off temperature (catalyst characteristic B).

The units 221, 240 and 250 executing processing in a different manner from that in the first embodiment will be described in more detail below.

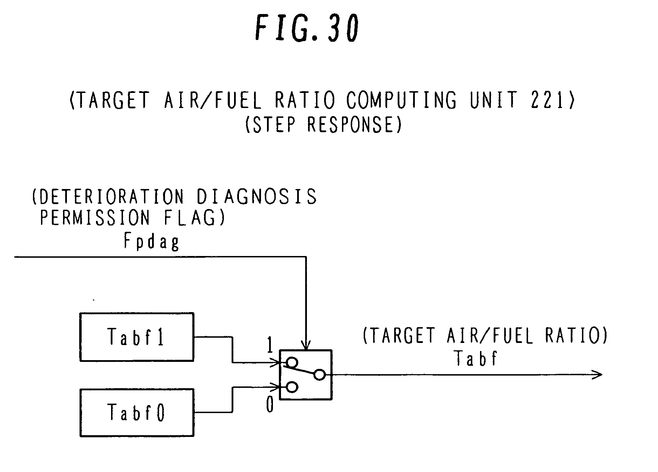

### <Target Air/Fuel Ratio Computing Unit 221 (step response) (Fig. 30)>

This computing unit 221 is substituted for the target air/fuel ratio computing unit 121 (see Fig. 24) included in the air/fuel ratio modification term computing unit 120 (see Fig. 23) in the first embodiment. Specifically, the target air/fuel ratio computing unit 221 executes the processing shown in Fig. 30. When Fpdag = 1 holds, the target air/fuel ratio is set to a diagnosis-mode target air/fuel ratio Tabf1. Otherwise, an ordinary target air/fuel ratio Tabf0 is set. More specifically, a response delay time occurs from a time at which the output of the A/F sensor 52 has reached a level corresponding to Tabf1 to a time at which the output of the O₂ sensor 51 has reached a level corresponding to Tabf1. This response delay time depends on the oxygen storage (release) performance of the three-way catalyst 50. In this embodiment, Tabf0 is a value corresponding to the stoichiometric air/fuel ratio, and Tabf1 is a value shifted from the stoichiometric air/fuel ratio toward the lean side by a predetermined value. The value of Tabf1 is preferably decided based on experiments from the viewpoints of diagnosis accuracy and exhaust performance.

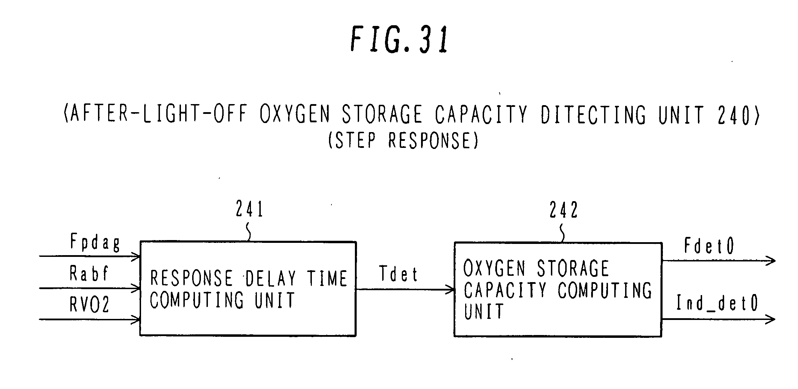

### <After-Light-Off Oxygen Storage capacity Detecting Unit 240 (Step Response) (Fig. 31)>

This detecting unit 240 detects the oxygen storage capacity after the light-off. Specifically, as shown in Fig. 31, this detecting unit 240 comprises a response delay time computing unit 241 for computing the response delay time from an output Rabf of the A/F sensor 52 to an output RVO2 of the O₂ sensor 51, and an oxygen storage capacity computing unit 242 for computing the oxygen storage capacity of the three-way catalyst 50 based on the computed response delay time.

The response delay time computing unit 241 and the oxygen storage capacity computing unit 242 will be described in more detail below.

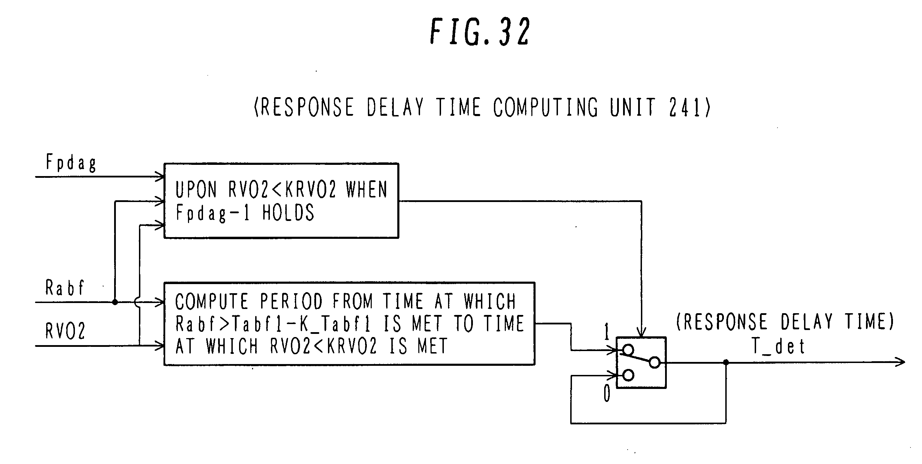

### <Response Delay Time Computing Unit 241 (Fig. 32)>

This computing unit 241 computes the response delay time from the output Rabf of the A/F sensor 52 to the output RVO2 of the O₂ sensor 51. Specifically, as shown in Fig. 32, when Fpdag = 1 holds and the target air/fuel ratio computing unit 221 sets the diagnosis-mode target air/fuel ratio Tabf1, a response delay time T_det is given as a period from a time at which Rabf > Tabf1 - K_Tabf1 is met to a time at which RVO2 < KRVO2 is met.

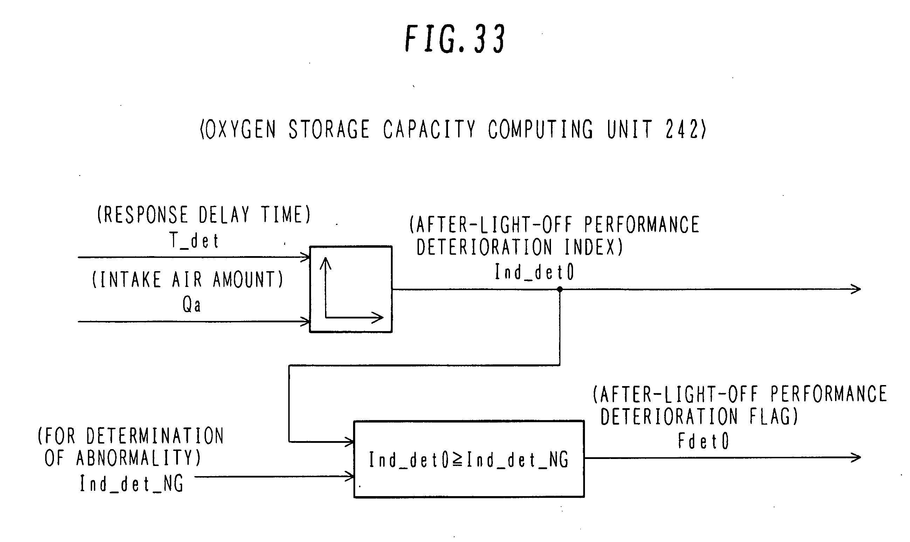

### <Oxygen Storage capacity Computing Unit 242 (Fig. 33)>

This computing unit 242 computes the oxygen storage capacity of the three-way catalyst 50. Specifically, as shown in Fig. 33, an after-light-off performance deterioration index Ind_det0 is obtained by referring to a map with the response delay time T_det and the intake air amount Qa being parameters. The map used in obtaining Ind_det0 is preferably decided based on experiments from the relationship between the oxygen storage capacity of the three-way catalyst 50 and the exhaust performance. Also, in the state of Ind_det0 ≥ Ind_det_NG, this is determined as indicating that the oxygen storage capacity (catalyst performance) has deteriorated to a limit, whereupon an after-light-off performance deterioration flag Fdet0 = 1 is set. Note that Ind_det_NG representing the deterioration limit is decided depending on the target exhaust performance (diagnosis performance).

### <Light-Off Temperature Estimating Unit 250>

This estimating unit 250 is substantially the same as the estimating unit 150 in the first embodiment, and therefore a detailed description thereof is omitted here.

### (Third Embodiment)

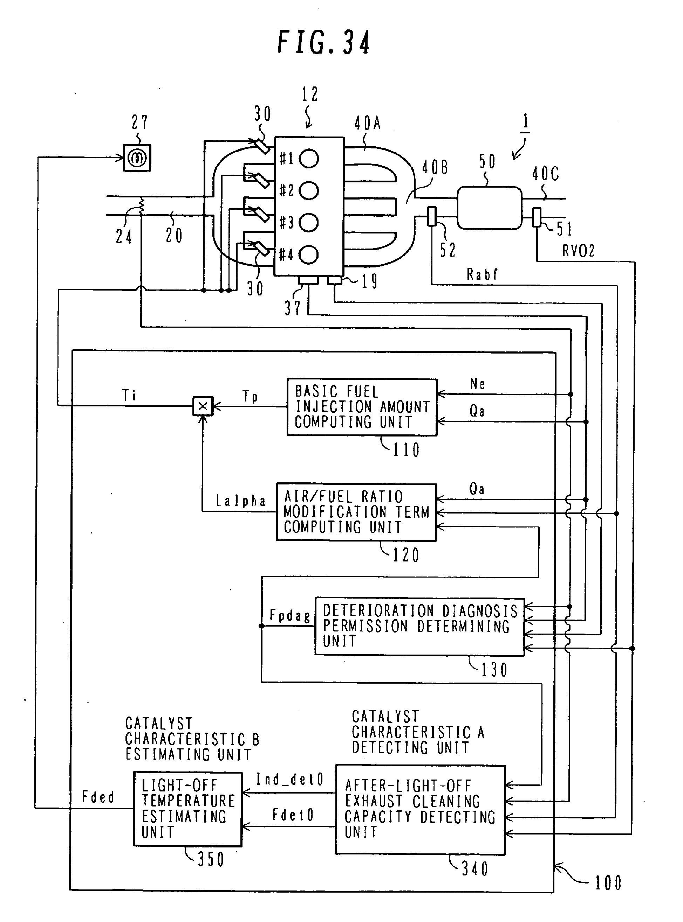

Fig. 34 is a functional block diagram showing a control system in a third embodiment. As shown in the functional block diagram, a control unit 100 similar to that in the first and second embodiments comprises a basic fuel injection amount computing unit 110, an air/fuel ratio modification term computing unit 120, a deterioration diagnosis permission determining unit 130, (these three units being the same as those in the first embodiment), a catalyst characteristic A (exhaust cleaning capacity after-light-off) detecting unit 340, and a catalyst characteristic B (light-off temperature) estimating unit 350. In this third embodiment, a NOx sensor 53 is disposed downstream of the three-way catalyst 50 instead of the O₂ sensor. An output signal from the NOx sensor 53 is also supplied to the control unit 100.

In an ordinary mode, the control unit 100 computes a fuel injection amount Ti per cylinder based on a basic fuel injection amount Tp and an air/fuel ratio modification term Lalpha so that air/fuel ratios of all the cylinders are held at the stoichiometric air/fuel ratio. While that process is the same as that in the first embodiment, this third embodiment differs in the following point. When the deterioration diagnosis is permitted, the target air/fuel ratio is oscillated at a predetermined frequency, and the exhaust cleaning capacity after-light-off (catalyst performance A) of the three-way catalyst 50 is detected in accordance with an output signals of the NOx sensor 53 at that time. Then, based on the detection result, the control unit 100 estimates the light-off temperature (catalyst characteristic B).

The units 340 and 350 executing processing in a different manner from that in the first and second embodiments will be described in more detail below.

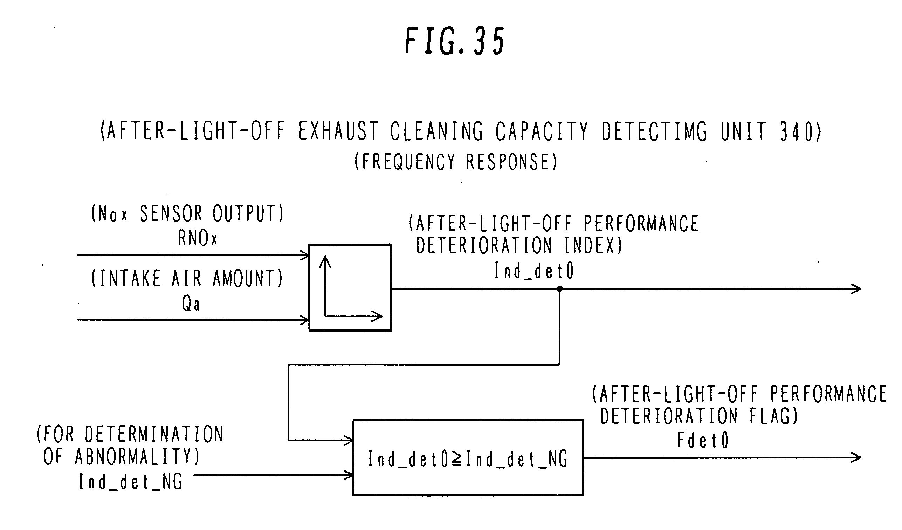

### <After-Light-Off Exhaust Cleaning Capacity Detecting Unit 340 (Fig. 35)>

This detecting unit 340 detects the exhaust cleaning capacity after the light-off. Specifically, the detection is executed as shown in Fig. 35. An after-light-off performance deterioration index Ind_det0 is obtained by referring to a map with an output value RNOx of the NOx sensor 53 and an intake air amount Qa being parameters. The map used in obtaining Ind_det0 is preferably decided based on experiments from the NOx cleaning capacity of the three-way catalyst 50. Also, in the state of Ind_det0 ≥ Ind_det_NG, this is determined as indicating that the exhaust cleaning capacity (catalyst performance) has deteriorated to a limit, whereupon an after-light-off performance deterioration flag Fdet0 = 1 is set. Note that Ind_det_NG representing the deterioration limit is decided depending on the target exhaust performance (diagnosis performance).

### <Light-Off Temperature Estimating Unit 350 (Fig. 34)>

This estimating unit 350 is substantially the same as the estimating units in the first and second embodiments, and therefore a detailed description thereof is omitted here.

While this third embodiment employs the NOx sensor, similar processing to that described above can also be executed by using, for example, an HC sensor or a CO sensor.

### (Fourth Embodiment)

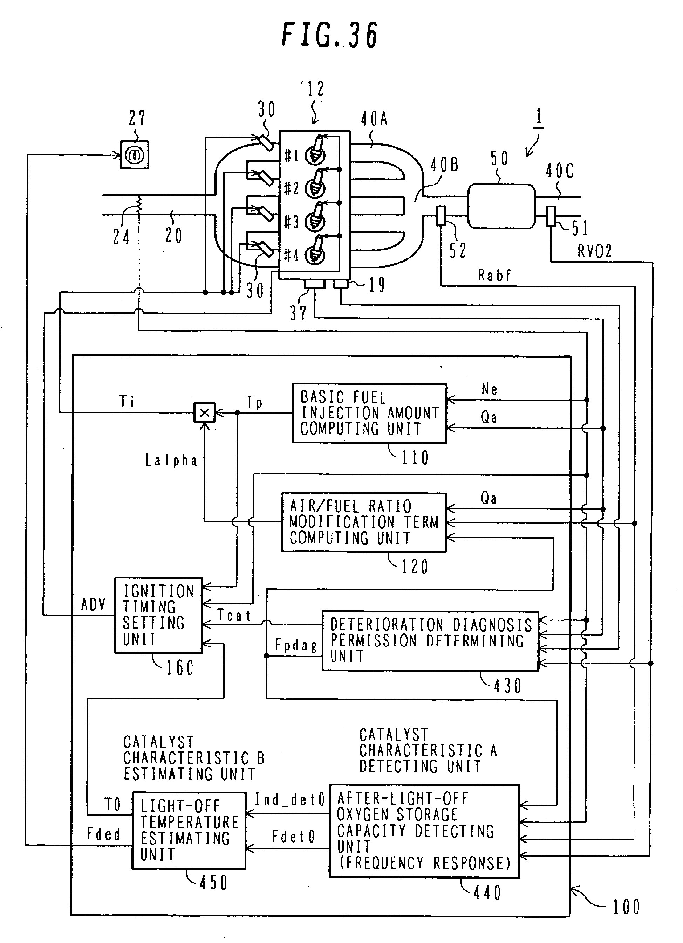

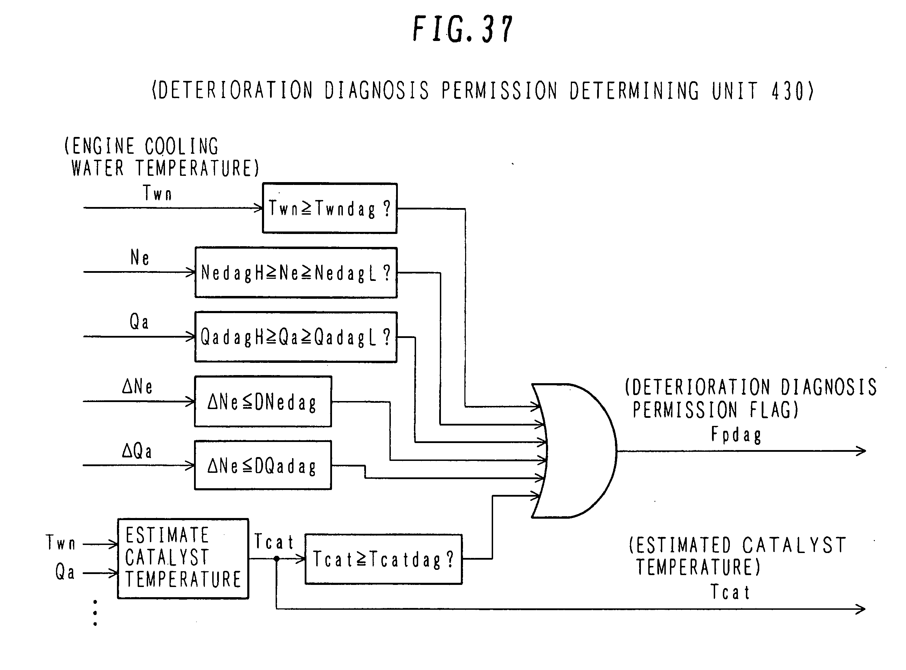

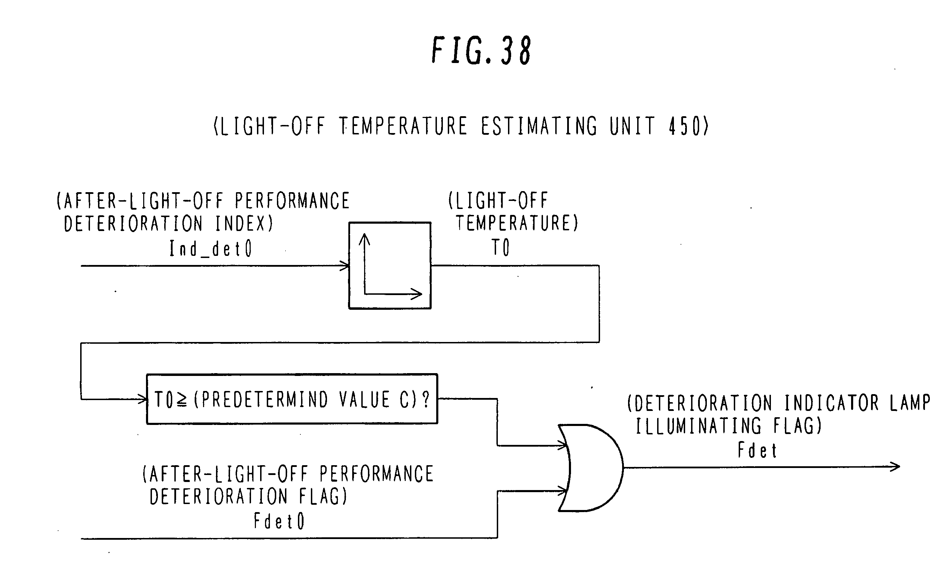

Fig. 36 is a functional block diagram showing a control system in a fourth embodiment. As shown in the functional block diagram, a control unit 100 similar to that in the first through third embodiments comprises a basic fuel injection amount computing unit 110, an air/fuel ratio modification term computing unit 120, a deterioration diagnosis permission determining unit 430, a catalyst characteristic A (after-light-off oxygen storage capacity) detecting unit 440, a catalyst characteristic B (light-off temperature) estimating unit 450, and an ignition timing setting unit 160 for, based on the estimated light-off temperature, setting a retard amount of ignition timing at the startup and a period during which the ignition timing is retarded. In this fourth embodiment, the deterioration diagnosis permission determining unit 430 and the catalyst characteristic B (light-off temperature) estimating unit 450 are constituted respectively as shown in Figs. 37 and 38. The ignition timing setting unit 160, which is not disposed in the above-described embodiments, is constituted as follows.

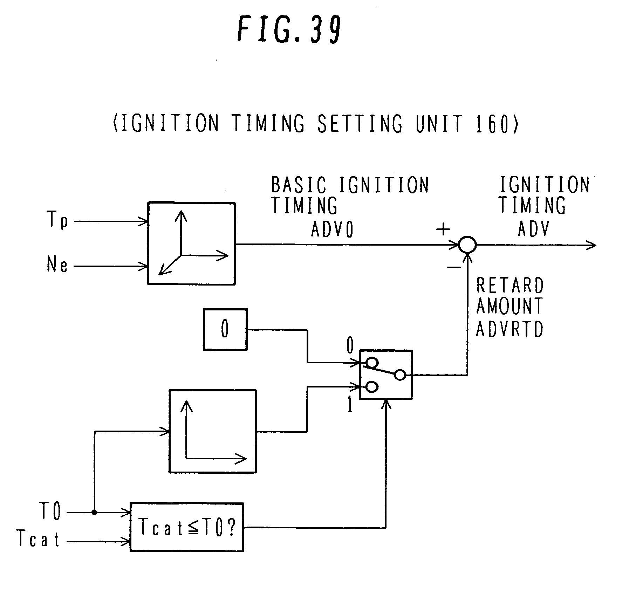

### <Ignition Timing Setting Unit 160 (Fig. 39)>

This setting unit 160 sets the ignition timing. Specifically, the setting is executed as shown in Fig. 39. Basic ignition timing ADV0 is decided based on Tp (basic fuel injection amount) and Ne (engine rotation speed). When the estimated catalyst temperature does not reach the light-off temperature, i.e., in the state of Tcat ≤ T0, a value obtained by referring to a map with the light-off temperature T0 being a parameter is set as a retard amount ADVRTD of the ignition timing. Then, a value obtained by subtracting the retard amount ADVRTD of the ignition timing from the basic ignition timing ADV0 is set as ignition timing ADV.

While the embodiments have been described above in connection with the case using the three-way catalyst, the present invention is not limited to the three-way catalyst so long as a catalyst has the three-way performance, and the present invention is also applicable to the cases using an HC adsorbing combustion catalyst, a lean NOx catalyst, etc. In particular, the present invention can be advantageously applied to the case using the HC adsorbing combustion catalyst because the light-off temperature is a very important factor in deciding the performance of that catalyst.
Features and specific details of the structure of the above-described embodiments may be exchanged or combined in any way to form further embodiments optimized for the respective application. As far as those modifications are readily apparent for an expert skilled in the art they shall be disclosed implicitly by the above description without specifying explicitly every possible combination.

## Claims

1. An engine self-diagnosis system (1) comprising:
means (140) for directly or indirectly detecting exhaust cleaning capacity after-light-off of an exhaust cleaning catalyst (50) when temperature of said catalyst (50) or temperature of exhaust gas flowing into said catalyst (50) is within a predetermined temperature range; and
means (150) for, based on the detected catalyst exhaust cleaning capacity after-light-off, estimating light-off temperature of said catalyst (50) which is resulted, when the temperature of said catalyst (50) is outside the predetermined temperature range.

2. The engine self-diagnosis system (1) according to Claim 1, wherein said catalyst (50) has at least three-way performance.

3. The engine self-diagnosis system (1) according to Claim 1 or 2, wherein said catalyst (50) is an HC adsorbing combustion catalyst that adsorbs HC when the catalyst temperature is within a predetermined temperature range, desorbs the adsorbed HC when the catalyst temperature exceeds the predetermined temperature range, and cleans the adsorbed and desorbed HC.

4. The engine self-diagnosis system (1) according to at least one of Claims 1 to 3, wherein said catalyst (50) is a lean NOx catalyst.

5. The engine self-diagnosis system (1) according to at least one of Claims 1 to 4, further comprising:
means for directly or indirectly detecting the temperature of said catalyst (50);
means (140) for directly or indirectly detecting the catalyst exhaust cleaning capacity after-light-off when the catalyst temperature detected by said detecting means is within a temperature range in which an exhaust cleaning rate is not smaller than a predetermined value; and
means (150) for, based on the detected catalyst exhaust cleaning capacity after-light-off, estimating the catalyst light-off temperature resulted when the catalyst temperature detected by said detecting means is within a temperature range in which the exhaust cleaning rate is smaller than the predetermined value.

6. The engine self-diagnosis system (1) according to at least one of Claims 1 to 5, wherein the catalyst light-off temperature is a catalyst temperature T0 at which the exhaust cleaning rate is not smaller than the predetermined value.

7. The engine self-diagnosis system (1) according to at least one of Claims 1 to 6, further comprising catalyst deterioration determining means for determining that said catalyst (50) has deteriorated, when the catalyst temperature T0 at which the exhaust cleaning rate is not smaller than the predetermined value exceeds a predetermined temperature.

8. The engine self-diagnosis system (1) according to Claim 7, wherein said catalyst (50) is an HC adsorbing combustion catalyst, and said catalyst deterioration determining means determines that said HC adsorbing combustion catalyst has deteriorated, when the catalyst temperature T0 at which the exhaust cleaning rate is not smaller than the predetermined value exceeds a predetermined temperature.

9. The engine self-diagnosis system (1) according to Claim 7 or 8, wherein said catalyst (50) is a lean NOx catalyst, and said catalyst deterioration determining means determines that said lean NOx catalyst (51) has deteriorated, when the catalyst temperature T0 at which the exhaust cleaning rate is not smaller than the predetermined value exceeds a predetermined temperature.

10. The engine self-diagnosis system (1) according to at least one of Claims 1 to 9, wherein the exhaust cleaning capacity after-light-off is an oxygen storage capacity.

11. The engine self-diagnosis system (1) according to one of Claims 1 to 10, further comprising exhaust component detecting means disposed downstream of said catalyst (50).

12. The engine self-diagnosis system (1) according to one of Claims 1 to 11, further comprising an O₂ sensor (51) or an A/F sensor downstream of said catalyst (50).

13. The engine self-diagnosis system (1) according to Claim 12, further comprising means for detecting oxygen storage capacity of said catalyst (50) based on an output signal from said O₂ sensor (51) or said A/F sensor.

14. The engine self-diagnosis system (1) according to Claim 12 or 13, further comprising:
means for oscillating an O₂ concentration or an air/fuel ratio upstream of said catalyst (50) at a predetermined frequency;
means (141) for computing a component at the predetermined frequency of the output signal from said O₂ sensor (51) or said A/F sensor; and
means (142) for detecting oxygen storage capacity of said catalyst (50) based on the computed component at the predetermined frequency.

15. The engine self-diagnosis system (1) according to one of Claims 12 to 14, further comprising:
means for changing an O₂ concentration or an air/fuel ratio upstream of said catalyst (50) by a predetermined value;
response delay time computing means (241) for computing a response delay time from a time at which the O₂ concentration or the air/fuel ratio upstream of said catalyst (50) is changed by a predetermined value to a time at which an output signal from said O₂ sensor (51) downstream of said catalyst (50) is changed by a predetermined value; and
means (242) for detecting oxygen storage capacity of said catalyst (50) based on the computed response delay time.

16. The engine self-diagnosis system (1) according to one of Claims 1 to 15, further comprising:
means for raising temperature of said catalyst;
catalyst temperature estimating means;
an O₂ sensor (51), an A/F sensor, or an exhaust sensor (53) disposed downstream of said catalyst (50);
means (340) for directly detecting, based on an output signal from said O₂ sensor (51), said A/F sensor, or said exhaust sensor (53), whether the exhaust cleaning rate of said catalyst is not smaller than a predetermined value and said catalyst (50) is in a light-off state; and
abnormality determining means for determining said catalyst temperature raising means to be abnormal, when said means for directly detecting catalyst light-off does not detect that said catalyst is in the light-off state.

17. The engine self-diagnosis system (1) according to one of Claims 1 to 16, further comprising means for indicating the catalyst exhaust cleaning capacity after-light-off and/or light-off temperature or information related to the catalyst exhaust cleaning capacity after-light-off and/or light-off temperature.

18. The engine self-diagnosis system (1) according to one of Claims 1 to 17, further comprising means for modifying an engine control parameter based on the catalyst exhaust cleaning capacity after-light-off and/or light-off temperature.

19. The engine self-diagnosis system (1) according to one of Claims 1 to 18, further comprising means for modifying a control parameter for said catalyst temperature raising means based on the catalyst light-off temperature.

20. The engine self-diagnosis system (1) according to Claim 18 or 19, wherein the control parameter for said catalyst temperature raising means is a retard amount of ignition timing and/or a period during which the ignition timing is retarded.

21. An automobile equipped with the engine self-diagnosis system according to one of Claims 1 to 20.

## Patentansprüche

1. Verbrennungsmotor-Selbstdiagnosesystem (1) mit:
Mitteln (140) zum direkten oder indirekten Erfassen einer Abgasreinigungsfähigkeit nach dem Anspringen eines Abgasreinigungskatalysators (50), wenn die Temperatur des Katalysators oder die Temperatur von in den Katalysator (50) strömendem Abgas in einem vorgegebenen Temperaturbereich liegt; und
Mitteln (150) zum Schätzen einer Anspringtemperatur des Katalysators (50) auf der Grundlage der erfassten Katalysator-Abgasreinigungsfähigkeit nach dem Anspringen, welche sich ergibt, wenn die Temperatur des Katalysators (50) außerhalb des vorgegebenen Temperaturbereichs liegt.

2. Verbrennungsmotor-Selbstdiagnosesystem (1) nach Anspruch 1, wobei der Katalysator (50) zumindest eine Dreiwegeleistung aufweist.

3. Verbrennungsmotor-Selbstdiagnosesystem (1) nach Anspruch 1 oder 2, wobei der Katalysator (50) ein HC-adsorbierender Verbrennungskatalysator ist, der HC adsorbiert, wenn die Katalysatortemperatur in einem vorgegebenen Temperaturbereich liegt, das adsorbierte HC desorbiert, wenn die Katalysatortemperatur den vorgegebenen Temperaturbereich übersteigt, und das adsorbierte und desorbierte HC reinigt.

4. Verbrennungsmotor-Selbstdiagnosesystem (1) nach zumindest einem der Ansprüche 1 bis 3, wobei der Katalysator ein Mager-NOx-Katalysator ist.

5. Verbrennungsmotor-Selbstdiagnosesystem (1) nach zumindest einem der Ansprüche 1 bis 4, weiterhin mit:
Mitteln zum direkten oder indirekten Erfassen der Temperatur des Katalysators (50);
Mitteln (140) zum direkten oder indirekten Erfassen der Katalysator-Abgasreinigungsfähigkeit nach dem Anspringen, wenn die von den Erfassungsmitteln erfasste Katalysatortemperatur in einem Temperaturbereich liegt, in dem eine Abgasreinigungsrate nicht kleiner als ein vorgegebener Wert ist; und
Mitteln (150) zum Schätzen der Katalysator-Anspringtemperatur auf der Grundlage der erfassten Katalysator-Abgasreinigungsfähigkeit nach dem Anspringen, welche sich ergibt, wenn die von den Erfassungsmitteln erfasste Katalysatortemperatur in einem Temperaturbereich liegt, in dem die Abgasreinigungsrate kleiner als der vorgegebene Wert ist.

6. Verbrennungsmotor-Selbstdiagnosesystem (1) nach zumindest einem der Ansprüche 1 bis 5, wobei die Katalysator-Anspringtemperatur eine Katalysatortemperatur TO ist, bei der die Abgasreinigungsrate nicht kleiner als der vorgegebene Wert ist.

7. Verbrennungsmotor-Selbstdiagnosesystem (1) nach zumindest einem der Ansprüche 1 bis 6, weiterhin mit einem Katalysatorverschlechterungs-Bestimmungsmittel zum Bestimmen, dass der Katalysator (50) schlechter geworden ist, wenn die Katalysatortemperatur TO, an der die Abgasreinigungsrate nicht kleiner als der vorgegebene Wert ist, eine vorgegebene Temperatur übersteigt.

8. Verbrennungsmotor-Selbstdiagnosesystem (1) nach Anspruch 7, wobei der Katalysator (50) ein HC-adsorbierender Verbrennungskatalysator ist und das Katalysatorverschlechterungs-Bestimmungsmittel bestimmt, dass der HC-adsorbierende Verbrennungskatalysator schlechter geworden ist, wenn die Katalysatortemperatur TO, bei der die Abgasreinigungsrate nicht kleiner als der vorgegebene Wert ist, eine vorgegebene Temperatur übersteigt.

9. Verbrennungsmotor-Selbstdiagnosesystem (1) nach Anspruch 7 oder 8, wobei der Katalysator (50) ein Mager-NOx-Katalysator ist und das Katalysatorverschlechterungs-Bestimmungsmittel bestimmt, dass der Mager-NOx-Katalysator (51) schlechter geworden ist, wenn die Katalysatortemperatur TO, bei der die Abgasreinigungsrate nicht kleiner als der vorgegebene Wert ist, eine vorgegebene Temperatur übersteigt.

10. Verbrennungsmotor-Selbstdiagnosesystem (1) nach zumindest einem der Ansprüche 1 bis 9, wobei die Abgasreinigungsfähigkeit nach dem Anspringen eine Sauerstoffspeicherfähigkeit ist.

11. Verbrennungsmotor-Selbstdiagnosesystem (1) nach einem der Ansprüche 1 bis 10, weiterhin mit Abgaskomponenten-Erfassungsmitteln, die hinter dem Katalysator (50) angeordnet sind.

12. Verbrennungsmotor-Selbstdiagnosesystem (1) nach einem der Ansprüche 1 bis 11, weiterhin mit einem O₂-Sensor (51) oder einem L/K-Sensor hinter dem Katalysator (50).

13. Verbrennungsmotor-Selbstdiagnosesystem (1) nach Anspruch 12, weiterhin mit Mitteln zum Erfassen einer Sauerstoffspeicherfähigkeit des Katalysators (50) auf der Grundlage eines Ausgangssignals von dem O₂-Sensor (51) oder dem L/K-Sensor.

14. Verbrennungsmotor-Selbstdiagnosesystem (1) nach Anspruch 12 oder 13, weiterhin mit:
Mitteln zum Oszillieren einer O₂-Konzentration oder eines Luft/Kraftstoff-Verhältnisses vor dem Katalysator (50) auf einer vorgegebenen Frequenz;
Mitteln (141) zum Berechnen einer Komponente auf der vorgegebenen Frequenz des Ausgangssignals von dem O₂-Sensor (51) oder dem L/K-Sensor; und
Mitteln (142) zum Erfassen einer Sauerstoffspeicherfähigkeit des Katalysators (50) auf der Grundlage der berechneten Komponente auf der vorgegebenen Frequenz.

15. Verbrennungsmotor-Selbstdiagnosesystem (1) nach einem der Ansprüche 12 bis 14, weiterhin mit:
Mitteln zum Ändern einer O₂-Konzentration oder eines Luft/Kraftstoff-Verhältnisses vor dem Katalysator (50) um einen vorgegebenen Wert;
Ansprechverzögerungszeit-Berechnungsmitteln (241) zum Berechnen einer Ansprechverzögerungszeit von einer Zeit, zu der die O₂-Konzentration oder das Luft/Kraftstoff-Verhältnis vor dem Katalysator (50) um einen vorgegebenen Wert geändert wird, bis zu einer Zeit, zu der ein Ausgangssignal von dem O₂-Sensor (51) hinter dem Katalysator (50) um einen vorgegebenen Wert geändert wird; und
Mitteln (242) zum Erfassen einer Sauerstoffspeicherfähigkeit des Katalysators (50) auf der Grundlage der berechneten Ansprechverzögerungszeit.

16. Verbrennungsmotor-Selbstdiagnosesystem (1) nach einem der Ansprüche 1 bis 15, weiterhin mit:
Mitteln zum Erhöhen der Temperatur des Katalysators;
Katalysatortemperatur-Schätzmitteln;
einem O₂-Sensor (51), einem L/K-Sensor oder einem Abgassensor (53), der hinter dem Katalysator (50) angeordnet ist,
Mitteln (340) zum direkten Erfassen auf der Grundlage eines Ausgangssignals von dem O₂-Sensor (51), dem L/K-Sensor oder dem Abgassensor (53), ob die Abgasreinigungsrate des Katalysators nicht kleiner als ein vorgegebener Wert ist und sich der Katalysator (50) in einem Anspringzustand befindet; und
Anormalitäts-Bestimmungsmitteln zum Bestimmen, dass die Katalysatortemperatur-Erhöhungsmittel anormal sind, wenn das Mittel zum direkten Erfassen des Katalysator-Anspringens nicht erfasst, dass sich der Katalysator in dem Anspringzustand befindet.

17. Verbrennungsmotor-Selbstdiagnosesystem (1) nach einem der Ansprüche 1 bis 16, weiterhin mit Mitteln zum Angeben der Katalysator-Abgasreinigungsfähigkeit nach dem Anspringen und/oder der Anspringtemperatur oder von Information im Zusammenhang mit der Katalysator-Abgasreinigungsfähigkeit nach dem Anspringen und/oder der Anspringtemperatur.

18. Verbrennungsmotor-Selbstdiagnosesystem (1) nach einem der Ansprüche 1 bis 17, weiterhin mit Mitteln zum Modifizieren eines Verbrennungsmotor-Steuerparameters auf der Grundlage der Katalysator-Abgasreinigungsfähigkeit nach dem Anspringen und/oder der Anspringtemperatur.

19. Verbrennungsmotor-Selbstdiagnosesystem (1) nach einem der Ansprüche 1 bis 18, weiterhin mit Mitteln zum Modifizieren eines Steuerparameters für die Katalysatortemperatur-Erhöhungsmittel auf der Grundlage der Katalysator-Anspringtemperatur.

20. Verbrennungsmotor-Selbstdiagnosesystem (1) nach Anspruch 18 oder 19, wobei der Steuerparameter für die Katalysatortemperatur-Erhöhungsmittel ein Verzögerungsbetrag der Zündzeitpunktverstellung und/oder eine Zeitspanne ist, während der die Zündzeitpunktverstellung verzögert ist.

21. Kraftfahrzeug, das mit dem Verbrennungsmotor-Selbstdiagnosesystem nach einem der Ansprüche 1 bis 20 ausgerüstet ist.

## Revendications

1. Système d'autodiagnostic de moteur (1) comportant :
des moyens (140) pour détecter directement ou indirectement une capacité de nettoyage d'échappement après l'activation d'un catalyseur de nettoyage d'échappement (50) lorsque la température dudit catalyseur (50) ou la température du gaz d'échappement circulant dans ledit catalyseur (50) est comprise dans une plage de température prédéterminée, et
des moyens (150) pour, sur la base de la capacité de nettoyage d'échappement de catalyseur détectée après l'activation, estimer une température d'activation dudit catalyseur (50) qui en résulte, lorsque la température dudit catalyseur (50) n'est pas comprise dans la plage de température prédéterminée.

2. Système d'autodiagnostic de moteur (1) selon la revendication 1, dans lequel ledit catalyseur (50) a des performances sur au moins trois voies.

3. Système d'autodiagnostic de moteur (1) selon la revendication 1 ou 2, dans lequel ledit catalyseur (50) est un catalyseur de combustion à adsorption HC qui adsorbe les hydrocarbures (HC) lorsque la température du catalyseur est comprise dans une plage de température prédéterminée, désorbe les hydrocarbures HC adsorbés lorsque la température du catalyseur dépasse la plage de température prédéterminée, et nettoie les hydrocarbures HC adsorbés et désorbés.

4. Système d'autodiagnostic de moteur (1) selon au moins l'une des revendications 1 à 3, dans lequel ledit catalyseur (50) est un catalyseur pauvre en NOx.

5. Système d'autodiagnostic de moteur (1) selon au moins l'une des revendications 1 à 4, comportant en outre :
des moyens pour détecter directement ou indirectement la température dudit catalyseur (50),
des moyens (140) pour détecter directement ou indirectement la capacité de nettoyage d'échappement du catalyseur après l'activation lorsque la température du catalyseur détectée par lesdits moyens de détection est comprise dans une plage de température dans laquelle un taux de nettoyage d'échappement n'est pas inférieur à une valeur prédéterminée, et
des moyens (150) pour, sur la base de la capacité de nettoyage d'échappement du catalyseur détectée après l'activation, estimer la température d'activation du catalyseur qui en résulte lorsque la température du catalyseur détectée par lesdits moyens de détection est comprise dans une plage de température dans laquelle le taux de nettoyage d'échappement est inférieur à la valeur prédéterminée.

6. Système d'autodiagnostic de moteur (1) selon au moins l'une des revendications 1 à 5, dans lequel la température d'activation du catalyseur et une température de catalyseur T0 à laquelle le taux de nettoyage d'échappement n'est pas inférieur à la valeur prédéterminée.

7. Système d'autodiagnostic de moteur (1) selon au moins l'une des revendications 1 à 6, comportant en outre des moyens de détermination de détérioration de catalyseur pour déterminer que ledit catalyseur (50) est détérioré, lorsque la température du catalyseur T0 à laquelle le taux de nettoyage d'échappement n'est pas inférieur à la valeur prédéterminée dépasse une température prédéterminée.

8. Système d'autodiagnostic de moteur (1) selon la revendication 7, dans lequel ledit catalyseur (50) est un catalyseur de combustion à adsorption HC, et lesdits moyens de détermination de détérioration de catalyseur déterminent que ledit catalyseur dé combustion à adsorption HC est détérioré, lorsque la température du catalyseur T0 à laquelle le taux de nettoyage d'échappement n'est pas inférieur à la valeur prédéterminée dépasse une température prédéterminée.

9. Système d'autodiagnostic de moteur (1) selon la revendication 7 ou 8, dans lequel ledit catalyseur (50) est un catalyseur pauvre en NOx, et lesdits moyens de détermination de détérioration de catalyseur déterminent que ledit catalyseur pauvre en NOx (51) est détérioré, lorsque la température du catalyseur T0 à laquelle le taux de nettoyage d'échappement n'est pas inférieur à la valeur prédéterminée dépasse une température prédéterminée.

10. Système de diagnostic de moteur (1) selon au moins l'une des revendications 1 à 9, dans lequel la capacité de nettoyage d'échappement après l'activation est une capacité de stockage d'oxygène.

11. Système d'autodiagnostic de moteur (1) selon l'une des revendications 1 à 10, comportant en outre des moyens de détection de composante d'échappement disposés en aval dudit catalyseur (50).

12. Système d'autodiagnostic de moteur (1) selon l'une des revendications 1 à 11, comportant en outre un détecteur de 0₂ (51) ou un détecteur A/F en aval dudit catalyseur (50).

13. Système d'autodiagnostic de moteur (1) selon la revendication 12, comportant en outre des moyens pour détecter une capacité de stockage d'oxygène dudit catalyseur (50) sur la base d'un signal de sortie en provenance du détecteur de 0₂ (51) dudit détecteur A/F.

14. Système d'autodiagnostic de moteur (1) selon la revendication 12 ou 13, comportant en outre :
des moyens pour faire osciller une concentration en 0₂ ou d'un rapport air/carburant en amont dudit catalyseur (50) à une fréquence prédéterminée,
des moyens (141) pour calculer une composante à la fréquence prédéterminée du signal de sortie à partir dudit détecteur de 0₂ (51) ou dudit détecteur A/F, et
des moyens (142) pour détecter une capacité de stockage d'oxygène dudit catalyseur (55) sur la base de la composante calculée à la fréquence prédéterminée.

15. Système d'autodiagnostic de moteur (1) selon l'une des revendications 12 à 14, comportant en outre
des moyens pour changer une concentration en 0₂ ou un rapport air/carburant en amont dudit catalyseur (50) par l'intermédiaire d'une valeur prédéterminée,
des moyens de calcul de temps de retard de réponse (241) pour calculer un temps de retard de réponse à partir d'un instant auquel la concentration en 0₂ ou le rapport air/carburant en amont dudit catalyseur (50) est changé par une valeur prédéterminée jusqu'à un instant auquel un signal de sortie en provenance dudit détecteur de 0₂ (51) en aval dudit catalyseur (50) est changé par une valeur prédéterminée, et
des moyens (242) pour détecter une capacité de stockage d'oxygène dudit catalyseur (50) sur la base du temps de retard de réponse calculé.

16. Système d'autodiagnostic de moteur (1) selon l'une des revendications 1 à 15, comportant en outre :
des moyens pour augmenter la température dudit catalyseur,
des moyens d'estimation de température de catalyseur,
un détecteur de 0₂ (51), un détecteur A/F, ou un détecteur d'échappement (53) disposé en aval dudit catalyseur (50),
des moyens (340) pour détecter directement, sur la base d'un signal de sortie en provenance dudit détecteur de 0₂ (51), dudit détecteur A/F, ou dudit détecteur d'échappement (53) si le taux de nettoyage d'échappement dudit catalyseur n'est pas inférieur à une valeur prédéterminée et si ledit catalyseur (50) est dans un état activé, et
des moyens de détermination d'anomalies pour déterminer lesdits moyens d'augmentation de température de catalyseur comme étant anormaux, lorsque lesdits moyens pour détecter directement une activation du catalyseur ne détectent pas que ledit catalyseur est dans l'état activé.

17. Système d'autodiagnostic de moteur (1) selon l'une des revendications 1 à 16, comportant en outre des moyens pour indiquer la capacité de nettoyage d'échappement du catalyseur après l'activation et/ou la température d'activation ou des informations associées à la capacité de nettoyage d'échappement du catalyseur après l'activation et/ou la température d'activation.

18. Système d'autodiagnostic de moteur (1) selon l'une des revendications 1 à 17, comportant en outre des moyens pour modifier un paramètre de commande du moteur sur la base de la capacité de nettoyage d'échappement du catalyseur après l'activation et/ou la température d'activation.

19. Système d'autodiagnostic de moteur (1) selon l'une des revendications 1 à 18, comportant en outre des moyens pour modifier un paramètre de commande pour lesdits moyens d'augmentation de température de catalyseur sur la base de la température d'activation de catalyseur.

20. Système d'autodiagnostic de moteur (1) selon la revendication 18 ou 19, dans lequel le paramètre de commande pour lesdits moyens d'augmentation de température de catalyseur est une quantité de retard de calage de l'allumage et/ou une période pendant laquelle le calage de l'allumage est retardé.

21. Automobile équipée du système d'autodiagnostic de moteur selon l'une des revendications 1 à 20.
